# EUROPÄISCHE PATENTSCHRIFT

(11) **EP 3 328 643 B1**
(45) Veröffentlichungstag und Bekanntmachung des Hinweises auf die Patenterteilung: **17.04.2019**
(21) Anmeldenummer: 16735811.8
(22) Anmeldetag: 12.05.2016
(51) Int. Cl.: B32B 15/01, B21D 22/00, B21D 35/00, C21D 9/46, B21D 22/02, B21D 53/88, B60G 21/05, B62D 25/00, B62D 25/02, B62D 25/04, B60R 19/03, C21D 1/673, B62D 21/02, B62D 21/15

(54) **KRAFTFAHRZEUGBAUTEIL AUS DREILAGIGEM SCHICHTVERBUNDSTAHL**
MOTOR VEHICLE COMPONENT MADE OF TRIPLE-LAYER LAMINATED STEEL
PIÈCE DE VÉHICULE À MOTEUR EN ACIER COMPOSITE TRICOUCHE

(30) Priorität: 28.07.2015 DE 102015112327
(43) Veröffentlichungstag der Anmeldung: 06.06.2018
(73) Patentinhaber: Benteler Automobiltechnik GmbH, 33102 Paderborn (DE)
(72) Erfinder: FREHN, Andreas, 33129 Delbrück (DE); FROST, Georg, 32839 Steinheim (DE); HANDING, Christian, 33449 Langenberg (DE); NITSCHKE, Christoph, DE-33175 Bad Lippspringe (DE); POHL Martin, 33187 Altenbeken (DE)
(74) Vertreter: Osterhoff, Utz
(86) Internationale Anmeldenummer: PCT/DE2016/100224
(87) Internationale Veröffentlichungsnummer: WO 2017/016536

(56) Entgegenhaltungen:
- WO-A1-2012/146384
- WO-A1-2016/074666
- DE-A1-102009 040 935
- DE-B3-102014 008 718

## Beschreibung

Die vorliegende Erfindung betrifft ein Kraftfahrzeugbauteil hergestellt durch Warmumformen und Presshärten einer metallischen Platine gemäß den Merkmalen im Oberbegriff von Patentanspruch 1.

Aus dem Stand der Technik ist es bekannt Bauteile für Kraftfahrzeuge durch Umformung von Blechplatinen herzustellen. Beispielsweise können so Fahrzeugstrukturbauteile in Form von Längsträgern, Querträgern, Kraftfahrzeugsäulen jedoch auch Kraftfahrzeugaußenhautbauteile hergestellt werden. Auch können Anbauteile für Kraftfahrzeuge, wie beispielsweise Querträger, Crashboxen oder ähnliche Bauteile hergestellt werden.

Die Bauteile werden zumeist aus Stahlblechen oder auch aus Leichtmetallblechen, beispielsweise Aluminiumblechen umgeformt. Bei der Herstellung von Stahlbauteilen hat sich ferner die Warmumform- und Presshärtetechnologie gerade im Automobilbau durchgesetzt. Hierzu werden härtbare Stahllegierungen verwendet, beispielsweise Stahl der Sorte 22MnB5.

Die bereitgestellten Blechplatinen werden hierzu im direkten Warmformprozess zunächst auf über Austenitisierungstemperatur, mithin über AC3 Temperatur erwärmt. Diese beträgt in der Regel mehr als 900°C. In diesem warmen Zustand sind die Formgebungsfreiheitsgrade erhöht und die auf über AC3 befindliche Blechplatine wird warm umgeformt. Anschließend wird in dem Umformwerkzeug derart schnell abgekühlt, dass eine Härtung eintritt. Insbesondere wandelt sich das austenitische Werkstoffgefüge dabei in martensitisches Werkstoffgefüge um.

Bei einem indirekten Warmformprozess wird die Platine aus einer härtbaren Stahllegierung zunächst im kalten Zustand bei Raumtemperatur umgeformt. Das durch Umformung hergestellte Kraftfahrzeugbauteil wird anschließend auf über Austentisierungtemperatur erwärmt und in einem Haltewerkzeug derart schnell abgekühlt, dass auch hier eine Härtung des Werkstoffgefüges eintritt.

Es können Kraftfahrzeugbauteile mit hohen oder höchstfesten Werkstoffeigenschaften hergestellt werden. Nachteilig ist jedoch, dass die hergestellten Kraftfahrzeugbauteile anfällig gegenüber Korrosion sind. Bekannte Schutzmaßnahmen sind das Aufbringen einer Beschichtung, beispielsweise mittels KTL-Verfahren. Auch ist die Verarbeitung von metallisch vorbeschichteten Platinen bekannt, so dass sich unter Einwirkung von Wärme eine intermetallische Phase zwischen der Vorbeschichtung und der darunter befindlichen härtbaren Stahllegierung ausbildet.

Aus der WO 2012/146384 A1 ist ein warm umformbarer Stahlstreifen bekannt, der eine mittlere Lage aus Stahlsubstrat aufweist und rostfreie Edelstahlaußenlagen an beiden Seiten seiner Oberfläche aufweist.

Aufgabe der vorliegenden Erfindung ist es ein Kraftfahrzeugbauteil bereitzustellen, das hohe Umformgerade aufweist, gezielt gewünschte Festigkeitseigenschaften besitzt und ein verbessertes Verhalten gegenüber Steinschlag und Korrosion besitzt. Die zuvor genannte Aufgabe wird bei einem Kraftfahrzeugbauteil mit den Merkmalen im Patentanspruch 1 gelöst.

Vorteilhafte Ausgestaltungsvarianten der Erfindung sind Gegenstand der abhängigen Patentansprüche.

Das erfindungsgemäße Kraftfahrzeugbauteil ist hergestellt durch Warmumformen und Presshärten einer metallischen Platine aus einer härtbaren Stahllegierung. Es zeichnet sich dadurch aus, dass die metallische Platine aus einem dreilagigen Schichtverbundstahl auch als Blechverband bezeichnet ausgebildet ist. Eine mittlere Lage, auch als Mittellage bezeichnet, ist aus einer härtbaren Stahllegierung ausgebildet. Die zwei Außenlagen sind aus einer rostfreien Stahllegierung, insbesondere einer rostfreien Edelstahllegierung ausgebildet. Somit ist das Kraftfahrzeugbauteil aus einem dreilagigen Schichtverbundstahl hergestellt und weist aufgrund der mittleren Lage die gewünschten partiellen oder homogenen Festigkeitseigenschaften, die mit einer härtbaren Stahllegierung erzielt werden können auf. Den Anforderungen in Bezug auf Korrosionsbeständigkeit sowie Resistenz gegenüber Steinschlägen wird durch die Außenlagen aus einer rostfreien Stahllegierung Rechnung getragen. Die einzelnen Lagen des dreilagigen Schichtverbundstahls sind insbesondere flächig und bevorzugt stoffschlüssig miteinander gebunden. Beispielsweise können diese durch Walzplattieren, von mehrlagigen Blöcken, Brammen, Knüppeln insbesondere unter Temperatureinwirkung hergestellt sein.

Gegenüber aus dem Stand der Technik bekannten Korrosionsschutzmaßnahmen ist erfindungsgemäß nach der Warmumformung und Presshärtung zunächst keine weitere Bearbeitung notwendig. Durch die Außenlagen ist ein Korrosionsschutz gegeben. Durch den Abschluss des Presshärtevorganges sind gezielt die gewünschten Festigkeitseigenschaften eingestellt. Es kann jedoch im Sinne der Erfindung eine partielle Wärmenachbehandlung stattfinden, um beispielsweise wiederum bereits gehärtete Bereiche in dem Kraftfahrzeugbauteil zu erweichen.

An dem Kraftfahrzeugbauteil lässt sich somit eine Zugfestigkeit Rm größer 1200 MPa, insbesondere größer 1300 MPa an der mittleren Lage einstellen. Es können bei Verwendung von hochkohlenstoffhaltigen vergütbaren Stahllegierungen Zugfestigkeiten Rm größer 1700 MPa, insbesondere größer 1500 MPa, bevorzugt größer 1900 MPa eingestellt werden. Bevorzugt wird eine Dehngrenze größer 1200 MPa eingestellt. Es kann eine Dehngrenze Rp 0,2 größer 900 MPa, insbesondere größer 1000 MPa eingestellt werden.

Somit kann das Kraftfahrzeugbauteil erfindungsgemäß als Schweller, als Querträger, als Türaufprallträger, als Türrahmen einer Seitenwand, als Tunnel, als Längsträger als Stirnwand, als Unterboden bzw. Unterbodenblech oder als Kraftfahrzeugsäule ausgebildet sein. Weitere Bauteile einer Kraftfahrzeugkarosserie oder aber auch Kraftfahrzeugsicherheitsbauteile sind im Sinne dieser Erfindung ebenfalls als Kraftfahrzeugbauteil zu verstehen bzw. können aus dem dreilagigen Schichtverbundstahl hergestellt sein.

Das erfindungsgemäße Kraftfahrzeugbauteil zeichnet sich weiterhin dadurch aus, dass es insbesondere als längliches Bauteil hergestellt ist, beispielsweise als Querträger, Türaufprallträger, Längsträger oder auch Schweller. Das Kraftfahrzeugbauteil ist in diesem Falle zumindest abschnittsweise im Querschnitt als geschlossenes Hohlprofil ausgebildet.

Das geschlossene Hohlprofil kann im Sinne der Erfindung auf drei Weisen hergestellt werden. Das Hohlprofil kann im Sinne der Erfindung einstückig und werkstoffeinheitlich ausgebildet sein. In diesem Falle wird die metallische Platine durch U-O-Formen bearbeitet. Der geschlossene Querschnitt kann dann weiterhin durch ein stirnseitiges oder flanschseitiges Koppelungsverfahren dauerhaft miteinander gekoppelt werden. Im Sinne der Erfindung ist es insbesondere möglich dann das Hohlprofil weiterhin noch durch Innenhochdruckumformung zu bearbeiten. Somit können in Längsrichtung voneinander verschiedene belastungsgerechte Querschnittsformen hergestellt werden. Das U-O-Formen und/oder das Innenhochdruckumformen können im Sinne der Erfindung als Warmumformen und Presshärten durchgeführt werden. Ähnlich wie beim U-O-Formen von Blechplatinen ist als weitere Möglichkeit das Rollformen von bandförmigem dreilagigem Schichtverbundstahl möglich. Durch eine Reihe von Walzen wird der Schichtverbundstahl dabei zu einem Hohlprofil umgeformt. Die Walzen übernehmen dabei die Funktion zweier Presswerkzeuge beim U-O-Formen.

Eine weitere Möglichkeit zur Erzeugung eines im Querschnitt geschlossenen Hohlprofil ist die Verwendung eines Schließbleches. Das Schließblech selbst kann dabei auch aus dem dreilagigen Schichtverbundstahl ausgebildet sein. Das Schließblech kann jedoch auch aus einem einlagigen Stahlblech, insbesondere aus dem Werkstoff der mittleren Lage des dreilagigen Schichtverbundstahls ausgebildet sein. Die Koppelung erfolgt durch Stoffschluss, insbesondere Schweißen, bevorzugt durch Punktschweißen.

Insbesondere kann das gesamte Kraftfahrzeugbauteil nach dem Herstellungsprozess und im Falle der Koppelung mit einem weiteren Bauteil, beispielsweise einem Schließblech, nach dem Fügeverfahren nochmals einer weiteren Korrosionsschutzmaßnahme unterzogen werden, beispielsweise einer KTL-Beschichtung. Bevorzugt weist das Bauteil jedoch keine zusätzliche Korrosionsbeschichtung auf den äußeren Lagen auf, bevor es bestimmungsgemäß im Fahrzeug verbaut ist.

In einer weiteren vorteilhaften Ausgestaltungsvariante der vorliegenden Erfindung ist die Platine selber als Tailored Rolled Blank, TFB oder als Tailored Welded Blank hergestellt, so dass das Kraftfahrzeugbauteil bereichsweise voneinander verschiedene Wandstärken aufweist und/oder voneinander verschiedene Werkstoffeigenschaften, insbesondere Festigkeitseigenschaften aufweist. So können insbesondere bei einem Tailored Rolled Blank bereichsweise voneinander verschiedene Wandstärken erzeugt werden. Die bereichsweise voneinander verschiedene Wandstärke weist dann auch das aus der Tailored Rolled Blank Platine hergstellte Kraftfahrzeugbauteil auf. Es wird dadurch ein Optimum an Materialeinsatz und geforderten Festigkeitseigenschaften geschaffen.

Im Falle eines Tailored Welded Blank (TWB) wird zunächst eine Platine, aus voneinander verschiedenen Platinen mit voneinander verschiedenen Wandstärken und/oder Festigkeitseigenschaften zusammengeschweißt. Diese als TWB hergestellte Platine kann dann aus einzelnen Teilplatinen hergestellt sein, die alle aus einem dreilagigen Schichtverbundstahl ausgebildet sind. Es ist jedoch auch möglich, dass mindestens eine Teilplatine aus einem einlagigen Stahl, insbesondere auch aus einem härtbaren Stahl hergestellt ist.

Es können auch Tailored Formed Blanks (TFB) verwendet werden. Hierbei werden Platinen, beispielsweise lokal durch Umformen, beispielsweise Tiefziehen ausgedünnt.

In einer weiteren vorteilhaften Ausgestaltungsvariante der vorliegenden Erfindung weisen die Außenlagen in Relation zueinander verschiedene Wandstärken auf. Bevorzugt weist die mittlere Lage eine Dicke auf, die kleiner gleich 90% der Gesamtdicke ausgebildet ist. Mithin weisen beide Außenlagen bevorzugt jeweils eine Dicke auf, die größer gleich 5% der Gesamtdicke ausgebildet ist. Die Gesamtdicke beträgt vorzugsweise von 1 mm bis 10 mm, insbesondere 1,5 mm bis 5 mm. Es ist im Sinne der Erfindung jedoch vorstellbar, dass die Außenlagen voneinander verschiedene Dicken aufweisen. Mindestens sollte eine Außenlage jedoch eine Mindestdicke von 0,1 mm besitzen. In Einbauposition des Kraftfahrzeugbauteils sollte dann eine Außenlage, die in Richtung der Fahrbahnoberfläche und/oder Umgebung gerichtet ist eine größere Wandstärke bzw. Dicke aufweisen, gegenüber der anderen Außenlage, die in Richtung eines Fahrgastinnenraumes bzw. zum Kraftfahrzeug hin gerichtet ist. Hierdurch wird insbesondere die Resistenz gegen Steinschlag erhöht. Ein auftreffender Stein der insbesondere mit hoher Intensität auftrifft, durchschlägt somit die in Relation dickere Außenlage nicht.

Die Begriffe Wandstärke und Dicke sind synonym verwendet. Auch die Begriffe Platine und Blechplatine.

Weiterhin kann das Kraftfahrzeugbauteil mindestens einen Bereich mit geringerer Festigkeit aufweisen. Dies wird hergestellt beispielsweise durch partielles Warmumformen und Presshärten. Der Bereich mit geringerer Festigkeit wird entweder nicht austenitisiert und/oder nicht derart rasch abgekühlt, so dass keine Härtung stattfindet. Bevorzugt kann auch eine Wärmenachbehandlung ausgeführt werden. Im Ergebnis können Bauteile mit verbessertem Korrosionsschutz oder gezielt scharf berandeten voneinander verschiedenen Festigkeitsbereichen herstellt werden. Auch mittels Tailored Welded Blanks kann ein Bauteil mit derartig partiellen Eigenschaften bereitgestellt werden.

Das erfindungsgemäße Kraftfahrzeugbauteil kann auch weiterhin bevorzugt eine oder mehrere der nachfolgend beschriebenen Eigenschaften aufweisen. Insbesondere wird es mit einem nachfolgend beschriebenen Verfahren hergestellt.

Es wird ein Kraftfahrzeugbauteil mit verbesserter Crashperformance vorgeschlagen, umfassend wenigstens einen Flächenabschnitt aus einem mehrlagigen, insbesondere dreilagigen Blechverbund mit einer Mittellage und zwei die Mittellage nach außen begrenzenden Außenlagen. Erfindungsgemäß sind die Außenlagen mit der Mittellage flächig und stoffschlüssig verbunden. Kennzeichen dabei ist, dass die Außenlagen aus einer nichtrostenden Stahllegierung mit einem Gefüge ausgewählt aus der Gruppe aus ferritischem, austenitischem oder martensitischem Gefüge und die Mittellage aus einer vergütbaren, insbesondere gehärteten Stahllegierung bestehen, und das Kraftfahrzeugbauteil einen Biegewinkel größer 80 Grad (°), ermittelt im Plättchen-Biegeversuch nach VDA 238-100:2010, bei einer Dehngrenze Rp0,2 von größer 900 MPa, aufweist. Dies erlaubt ein Höchstmaß an Korrosionsschutz während der gesamten Lebensdauer des Fahrzeugs, auch unter Berücksichtigung rauer Verarbeitungs- und Betriebsbedingungen. Weiterhin bewirkt die fest mit der härteren Mittellage verbundene und weichere Außenlage, dass die Rissneigung während einer bestimmungsgemäßen Belastung beim Crash, aber auch bereits während eines Füge- oder Kaltformvorgangs im Anschluss an die Bauteilfomgebung signifikant sinkt. Die Verbindung von Außenlagen und Mittellage erfolgt erfindungsgemäß flächig durch einen Stoffschluss derart, dass im Wesentlichen keine Einschlüsse oder Verunreinigungen zwischen den Lagen vorhanden sind, wobei Insbesondere eine metallurgische Verbindung ausgebildet ist. Die einzelnen Lagen sind erfindungsgemäß bevorzugt vollflächig miteinander stoffschlüssig und metallurgisch verbunden. Das für die Erfindung verwendete Ausgangsmaterial kann dabei beispielsweise durch Warmwalzen dreier vorher mechanisch und/oder stoffschlüssig vorfixierter verbundener Brammen, oder einer mehrstufig gegossenen Bramme, oder einer auftraggeschweißten Bramme erzeugt werden.

Als ferritisch nichtrostende Stahllegierung hat sich besonders vorteilhaft die Verwendung einer Legierung erwiesen, die neben erzschmelzenbedingten Verunreinigungen und Eisen folgende Legierungsbestanteile in Gewichtsprozent umfasst:

| | |
|---|---|
| Kohlenstoff (C): | 0,08 % bis 0,16 % |
| Silizium (Si): | 0,5 % bis 1,8 % |
| Mangan (Mn): | 0,8 % bis 1,4 % |
| Chrom (Cr): | 13,0 % bis 22,0 % |
| Aluminium (Al): | 0,5 % bis 1,5 % |
| Phosphor (P): | maximal 0,06 % |
| Schwefel (S): | maximal 0,02 %. |

Während Chrom die Hitzebeständigkeit und damit eine zunderfreie Oberfläche bei der Erwärmung und Warmumformung sicherstellt, sorgt die vergütbare Stahllegierung der Mittellage für ein Höchstmaß an Zugfestigkeit. Weiterhin sei hiermit bezüglich weiterer verwendbarer ferritisch nichtrostender Stahllegierungen auf den Inhalt der EN 10088-1 referenziert, mit Chromgehalten je nach Sorte zwischen 10,5 bis 30 %. Zur Gewährleistung der Schweißbarkeit dienen Stabilisierungszusätze von weniger als 0,5% von Titan, Niob oder Zirkon sowie der auf 0,16 % begrenzte Kohlenstoffgehalt.

Bezüglich verwendbarer austenitischer nichtrostender Stahllegierungen sei hiermit auf die Sorten EN 1.4310 und EN 1.4318 referenziert. Die Duktilität und Bruchdehnung nichtrostender, austenitischer Stähle ist sowohl im Tieftemperaturbereich als auch bei der Warmumformung sehr hoch. Die Sprödbruchneigung ist äußerst gering. Während der Kaltumformung und einem Crash erhöht sich seine Festigkeit durch Umwandlung metastabiler austenitischer Phasen in Martensit.

Bezüglich martensitischer nichtrostender Stahllegierungen sei beispielhaft auf die gut schweißbaren Sorten EN 1.4313 und EN 1.4418 sowie supermartensitische Stähle der Sorte EN 1.4415 referenziert. Letztere sind gleichzeitig hochfest, sehr zäh und weisen neben erzschmelzungsbedingten Verunreinigungen und Eisen eine chemische Zusammensetzung ausgedrückt in Gewichtsprozent auf, umfassend:

| | |
|---|---|
| Kohlenstoff (C) | max. 0,03% |
| Chrom (Cr) | 11-13% |
| Nickel (Ni) | 2-6% |
| Molybdän (Mo) | max. 3% |
| Stickstoff (N) | >0,005%. |

Bevorzugt beträgt der Biegewinkel des Kraftfahrzeugbauteils größer 95° und die Dehngrenze Rp0,2 größer 950 Megapascal (MPa).

Besonders bevorzugt ist der Biegewinkel größer 90°, insbesondere größer 100°, bevorzugt größer 110°. Insbesondere weist das Kraftfahrzeugbauteil ein Produkt aus Biegewinkel und Dehngrenze Rp0,2 zwischen 90.000 °MPa (Grad Megapascal) und 180.000 °MPa auf, wodurch sich ohne spezielle Maßnahmen der Prozessführung beim oder nach dem Warmformen ein für den Crashfall optimales Bauteilverhalten einstellt, ohne Gefahr von Rissen oder gar einem Bauteilversagen.

Um das Leichtbaupotential der vergütbaren Stahllegierung maximal auszunutzen, weist erfindungsgemäß bevorzugt die Mittellage des Flächenabschnittes ein ultrahochfestes Gefüge, mit mindestens 80 Prozent Martensit auf. Dabei beträgt die Zugfestigkeit Rm innerhalb des Flächenabschnitts mit dreilagigem Blechverbund größer als 1300 Megapascal (MPa).

Es ist weiterhin möglich, dass die Mittellage eines Flächenabschnitts ein Gefüge aufweist ausgewählt aus einer Gruppe aus angelassenem Martensit mit einem Anteil von mindestens 80 Prozent oder einem Mischgefüge mit mindestens 70 Prozent Anteilen an Ferrit und Perlit sowie Restanteil Martensit, Restaustenit und/oder Bainit.

Die Prozentangaben der Gefügebestandteile beziehen sich auf metallografisch leicht ermittelbare Flächenanteile.

Bevorzugt weist der Flächenabschnitt mit dem dreilagigen Blechverbund eine Gesamtdicke und eine der Außenlagen eine Dicke auf, wobei die Dicke einer der Außenlagen mindestens 3 Prozent und höchstens 15 Prozent, bevorzugt 4 Prozent bis 10 Prozent der Gesamtdicke dieses Flächenabschnitts entspricht. Unter Gesamtdicke ist dabei die Summe der Dicken der beiden Außenlagen sowie der Mittellage in den jeweiligen Flächenabschnitten zu verstehen. Die Gesamtdicke beträgt bevorzugt zwischen 1 und 10 Millimetern (mm), insbesondere zwischen 1,7 und 3,5 mm. Eine dickere Außenlage bringt unter Korrosionsschutzaspekten kaum noch Vorteile, reduziert aber die Gesamtfestigkeit des Flächenabschnitts deutlich. Eine dünnere Außenlage ist aktuell nur schwer prozesssicher walztechnisch herzustellen und zudem im Hinblick auf den Korrosionsschutz bei üblicher Nutzungszeit eines Kraftfahrzeugs nicht zu unterschreiten. Im Rahmen der Erfindung weisen die sich gegenüberliegenden Außenlagen bevorzugt dieselbe Dicke auf. Es ist aber auch möglich, dass unterschiedlich dicke Außenlagen in zumindest einem Flächenabschnitt ausgebildet sind, wenn dies erforderlich ist, um beispielsweise bei einem hohlen Kraftfahrzeugbauteil an unterschiedliche Crash- oder Korrosionsanforderungen auf der Innenseite und Außenseite besonders gut angepasst zu sein.

Als vergütbare Stahllegierung eignet sich besonders ein Mangan-Bor-Stahl wie zum Beispiel 16MnB5, bevorzugt aber 22MnB5 oder alternativ 36MnB5. Insbesondere können vergütbare Stahllegierungen mit einem Kohlenstoffgehalt größer gleich 0,27% Gewichtsprozent verwendet werden, beispielsweise MBW 1900. Diese wären zu spröde für direktes Warmformen und Presshärten. Aufgrund der Außenlagen ist deren Verarbeitung mittels Warmformen und Presshärten möglich. Auch können Kohlenstoffgehalte größer 0,30%, insbesondere größer 0,35% verwendet werden.

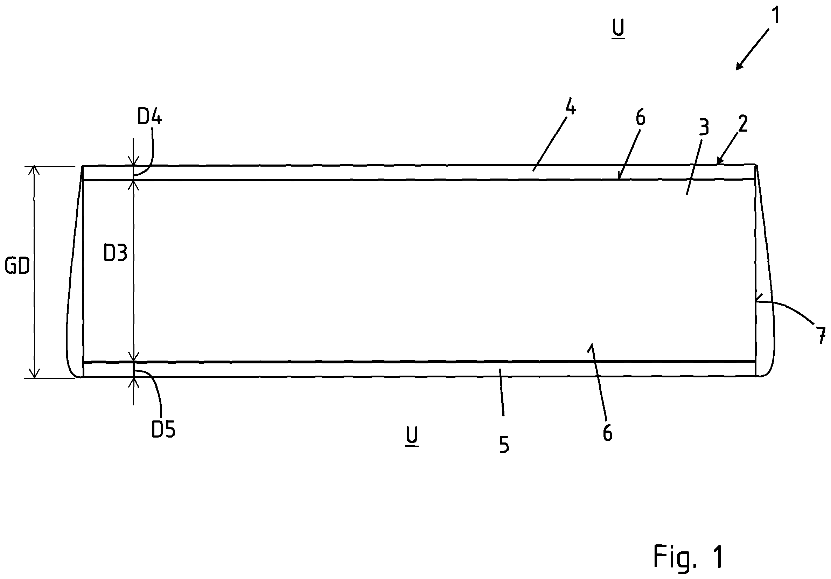

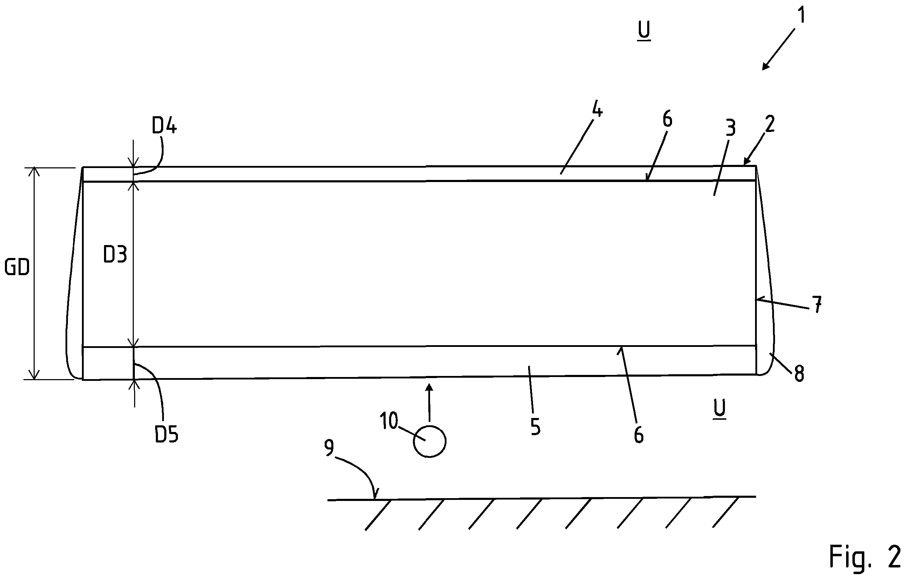

Abbildung 1 zeigt die mechanischen Kennwerte Zugfestigkeit Rm, Dehngrenze Rp0,2, Bruchdehnung A30 sowie Abbildung 2 den Biegewinkel eines erfindungsgemäßen Karosseriebauteils mit einer Mittelage aus Stahl der Sorte 22MnB5 und zwei Außenlagen der Dicke von jeweils 5 Prozent der Gesamtdicke aus einer ferritisch nichtrostenden Stahllegierung. Als ferritische Stahllegierung kam dabei X10CrAlSi18 zum Einsatz.

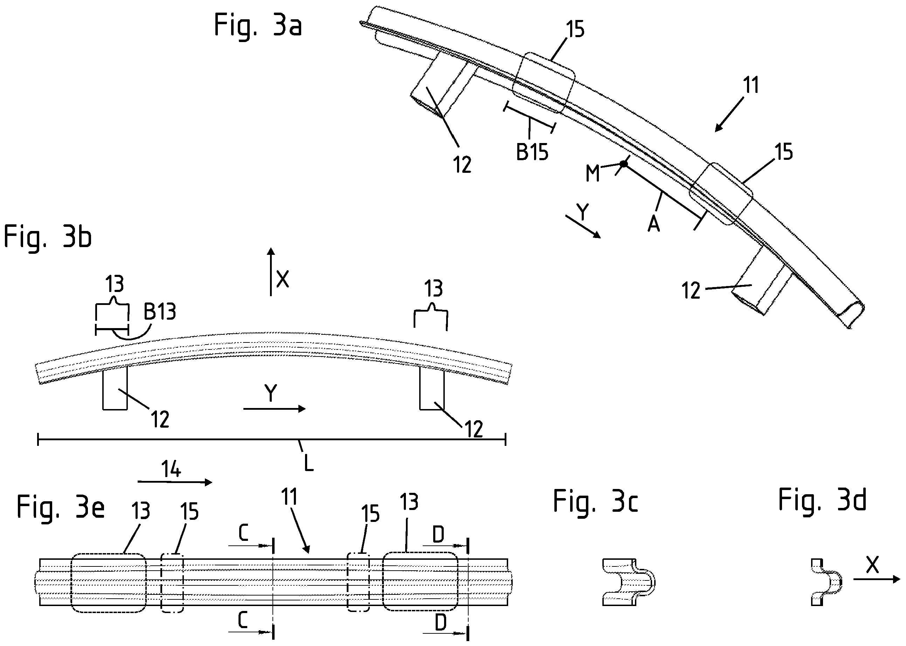

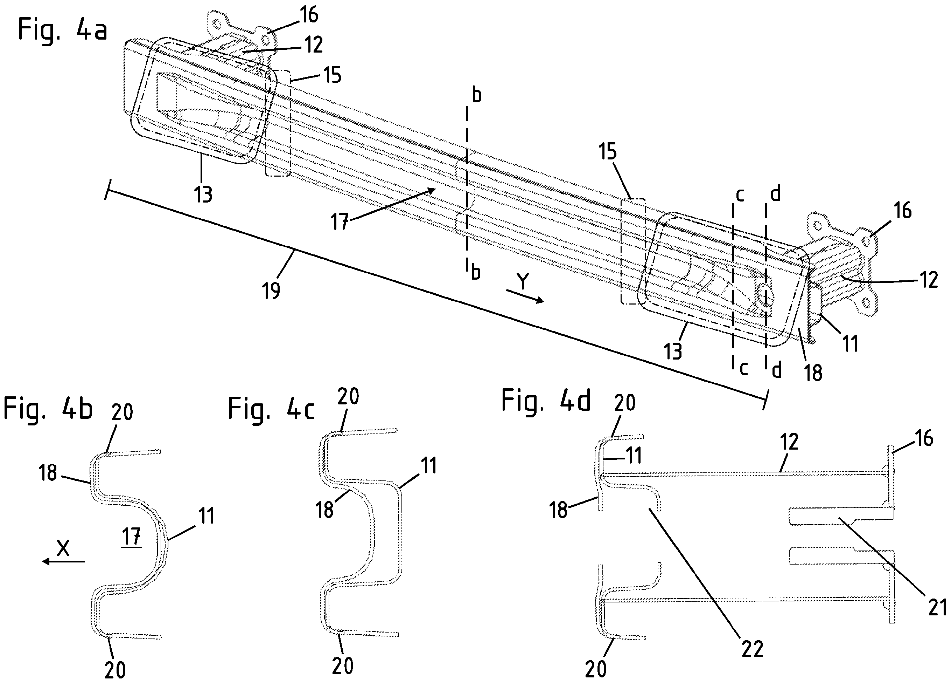

Im Vergleich dazu zeigen Abbildung 3 und 4 die Ergebnisse für ein Bauteil aus Stahl des Handelsnamens Usibor mit beidseitiger Aluminium-Silizium-Beschichtung nach dem Stand der Technik. Alle Bauteile hatten eine Dicke von 2 Millimetern.

In einer verbesserten Weiterbildung der Erfindung weist das Kraftfahrzeugbauteil einen zweiten Flächenabschnitt aus einem dreilagigen Blechverbund auf. Dabei weist der erste Flächenabschnitt eine erste Mittellage aus ultrahochfestem Gefüge mit mindestens 80 Prozent Martensit auf, während der zweite Flächenabschnitt eine zweite Mittellage mit einem Gefüge aufweist, ausgewählt aus einer Gruppe aus angelassenem Martensit mit einem Anteil von mindestens 80 Prozent oder Mischgefüge mit mindestens 70 Prozent Anteilen an Ferrit und Perlit sowie Restanteilen Martensit und/oder Restaustenit und/oder Bainit. Somit lassen sich Bauteile erzeugen mit weicheren und duktileren Flächenabschnitten.

Weiterhin kann vorgesehen werden, dass der zweite Flächenabschnitt ein dreilagiger Blechverbund ist, und die erste Mittellage und die zweite Mittellage jeweils eine Dicke aufweisen, und die Dicke der ersten Mittellage sich von der Dicke der zweiten Mittellage unterscheidet. Ein besonders dicker Flächenabschnitt kann so in Zonen höchster Spannung und Belastbarkeit angeordnet werden oder da, wo eine Materialstärkung inmitten eines dünneren Flächenabschnittes zum Fügen beispielsweise mittels Niet oder Schraube erforderlich ist.

Der erste Flächenabschnitt kann dabei eine Gesamtdicke aufweisen, die sich von der Gesamtdicke des zweiten oder weiteren Flächenabschnitten um wenigstens 10 Prozent, insbesondere zwischen 20 und 100 Prozent unterscheidet.

Erfindungsgemäß kann auch vorgesehen werden, dass das Kraftfahrzeugbauteil einen zweiten Flächenabschnitt oder weitere Flächenabschnitten aus einer ferritischen oder martensitischen oder austenitischen, nichtrostenden Stahllegierung aufweist. Besonders können die Flächenabschnitte des Kraftfahrzeugbauteils miteinander stumpf verschweißt aneinander grenzen.

Es ist aber auch möglich, dass das Kraftfahrzeugbauteil einen zweiten Flächenabschnitt aus einer ferritischen Stahllegierung aufweist, insbesondere sind die Flächenabschnitte wiederum miteinander stumpf verschweißt.

Auch kann der zweite Flächenabschnitt oder weitere Flächenabschnitt aus einer niedrig legierten Stahllegierung oder einer Mehrphasenstahllegierung oder aus einer Stahllegierung mit TWIP- und/oder TRIP-Eigenschaften ausgewählt sein. Besonders bevorzugt kann bei dem Verfahren zur Herstellung des Fahrwerk- oder Karosseriebauteils der zweite Flächenabschnitt nur auf eine Temperatur kleiner der AC 1 Temperatur erwärmt werden, um ein Verzundern zu verhindern.

Bevorzugt weist das Kraftfahrzeugbauteil einen Rand auf, wobei der Rand in einer Stirnseite im Flächenabschnitt mit dreilagigem Blechverbund wenigstens abschnittsweise von der Außenlage umgriffen ist, derart, dass die Stirnseite der Mittellage von der Umgebung durch die Außenlage abgeschirmt ist. Dadurch wird die Korrosionsbeständigkeit weiter verbessert.

Der verfahrensmäßige Teil der Erfindung wird gelöst durch ein Verfahren zur Herstellung eines, wie zuvor beschriebenen Kraftfahrzeugbauteils, mit den Schritten:
- Bereitstellen einer Blechplatine, umfassend wenigstens einen Flächenabschnitt aus einem dreilagigen Blechverbund mit einer Mittellage aus einer vergütbaren Stahllegierung und je einer, die Mittellage begrenzenden Außenlage,
- Erwärmen zumindest des Blechverbunds, insbesondere der gesamten Platine auf Austenitisierungstemperatur,
- Warmumformen der Blechplatine in einem wenigstens bereichsweise gekühlten Pressformwerkzeug und
- wenigstens teilweises Härten der geformten Blechplatine im Pressformwerkzeug oder in einer nachfolgenden Kühlwerkzeugstufe.

Ein besonderer Vorteil ergibt sich bei dem Verfahren dann, wenn das Warmumformen und Härten der Blechplatine in oder mittels einer einzigen Presse mit mehreren Werkzeugstufen durchgeführt wird. Alternativ oder bevorzugt zugleich kann vorgesehen werden, dass das Erwärmen und Warmumformen der Blechplatine in einer einzigen Presse mit mehreren Werkzeugstufen durchgeführt wird. Somit wird in einem einzelnen Pressentakt gleichzeitig jeweils wenigstens eine Blechplatine erwärmt, warmgeformt und gehärtet. Es versteht sich, dass bei Anwendung von mit Servomotor betriebenen oder mechanischen Pressen eine extrem niedrige Taktzeit und damit ein hoher Durchsatz ermöglicht werden.

In einer Weiterbildung des erfindungsgemäßen Verfahrens wird die Erwärmung innerhalb von 30 Sekunden, bevorzugt innerhalb von 20 Sekunden, insbesondere innerhalb von 10 Sekunden durchgeführt, was eine platzsparende, wärmeverlustarme Austenitisierung erlaubt. Vorteilhaft wird die Erwärmung im Takt sequenziell mit der Warmumformung bzw. dem Pressentakt einer Warmformlinie durchgeführt. Weiterhin bevorzugt kann die Erwärmung mindestens eine Haltephase umfassen. Es kann ohne Schutzgasatmosphäre erwärmt werden, da die Außenlagen keine Zunderneigung aufweisen. Als Vorteil ergibt sich, dass eine Strahlbehandlung des fertig geformten Bauteils entfallen kann, vor einem Lackieren oder einer KTL-Behandlung.

Bei der Erwärmung der Blechplatine ist eine Kontakterwärmung besonders günstig zum Einsatz zu bringen, da ein hoher Wirkungsgrad und niedrige Wärmeverluste damit ebenso einhergehen wie die Möglichkeit, durch unterschiedlich temperierte Kontaktplatten vor dem Warmformen einen ersten Flächenabschnitt der Blechplatine auf mehr als Austenitisierungstemperatur und einen zweiten Flächenabschnitt auf weniger als 700°C einzustellen. Dies gilt auch für eine Temperierstufe nach dem Erwärmen und vorgeschaltet der Pressformwerkzeugstufe. Insbesondere ergibt sich der Vorteil gegenüber vorbeschichteten Stählen, dass nicht zuvor ein Durchlegieren stattfinden muss.

Erfindungsgemäß kann dabei vorgesehen sein, dass ein Bauteilbeschnitt beziehungsweise ein Trennen, insbesondere ein Lochen des Bauteils nach dem Warmumformen und Presshärten, mithin erst am gehärteten Bauteil, durchgeführt wird. Dies kann dann durch ein kombiniertes Walzen und Schneiden oder Drückschneiden insbesondere in einer der Pressformwerkzeugstufe nachfolgenden Werkzeugstufe der Presse, aber auch außerhalb in einem separaten Arbeitsgang erfolgen. Dabei wird ein Teil der Außenlage im Randbereich in die Stirnseite des Trennbereichs beziehungsweise Lochrandes verdrängt und gleichzeitig wird ein Butzen oder Verschnittrand abgetrennt. Im Gegensatz zu aluminiumbeschichtetem Vergütungsstahl, wird erfindungsgemäß durch die Außenlagen aus nichtrostender Stahllegierung die Mittellage vor Umwelteinflüssen, insbesondere vor Eintrag prozessbedingtem molekularen Wasserstoffs beim Erwärmen geschützt und die Gefahr einer durch Wasserstoffeintrag bewirkten Versprödung des Bauteils unterbunden. Die Edelstahlaußenlagen sind nicht riss- bzw. bruchempfindlich, im Gegensatz zu beschichteten Bauteilen. Es ist daher sehr gut möglich, diese nach dem Presshärten im kalten und harten Zustand zu schneiden. Insbesondere bei einem Drückschneiden weist die untere Lage keinen signifikanten Bruchanteil auf. Die Schnittkanten sind im Wesentlichen gradfrei, aufgrund der erhöhten Duktilität der Außenlagen. Der Beschnitt kann auch in einem separaten Schneidwerkzeug durchgeführt werden. Insbesondere wird der Beschnitt vollständig durchgeführt. Dies bedeutet auf Endkontur. Insbesondere wird eine rissfreie Oberfläche bereitgestellt. Auch wird die Schnittkante weitestgehend rissfrei bereitgestellt. Es sind bevorzugt an den Oberflächen keine Risse bzw. Mikrorisse größer 10 µm vorhanden. Ein Laserbeschnitt oder auch komplexer Warmschnitt kann somit entfallen.

Weitere Vorteile, Merkmale, Eigenschaften und Aspekte der vorliegenden Erfindung sind Gegenstand der nachfolgenden Beschreibung. Die zuvor benannten Eigenschaften können einzeln oder in Kombination mit jeder Ausführungsform dargestellt in den einzelnen Figuren kombiniert werden, ohne den Rahmen der Erfindung zu verlassen. Die schematischen Figuren dienen dem einfachen Verständnis der Erfindung. Es zeigen:
- Figur 1: eine Querschnittsansicht durch einen erfindungsgemäßen dreilagigen Schichtverbundstahl,
- Figur 2: eine alternative Ausgestaltungsvariante zu Figur 1.
- Figur 3a bis e: einen erfindungsgemäß hergestellten Querträger,
- Figur 4a bis d: einen erfindungsgemäß hergestellten Querträger mit Schließblech,
- Figur 5a bis f: einen erfindungsgemäß hergestellten Türaufprallträger,
- Figur 6a bis f: einen erfindungsgemäß hergestellten Schweller,
- Figur 7a bis e: einen erfindungsgemäß hergestellten oberen Längsträger,
- Figur 8a bis c: einen erfindungsgemäß hergestellten unteren Längsträger,
- Figur 9a bis c: einen erfindungsgemäß hergestellten Tunnel,
- Figur 10: eine erfindungsgemäß hergestellte Stirnwand,
- Figur 11: ein erfindungsgemäß hergestelltes Bodenblech und
- Figur 12a bis d: ein erfindungsgemäß hergestellter Türrahmen.

Figur 1 zeigt einen schematischen Querschnitt durch ein Kraftfahrzeugbauteil 1, hergestellt aus einem dreilagigen Schichtverbundstahl 2. Hierzu ist eine mittlere Lage 3 ausgebildet aus einer härtbaren Stahllegierung. Ferner sind zwei Außenlagen 4, 5 ausgebildet. Die Außenlagen 4, 5 sind aus einer rostfreien bzw. nicht rostenden Stahllegierung, insbesondere Edelstahllegierung ausgebildet. Die Oberflächen 6 der mittleren Lage 3 sind somit durch die flächig anliegenden Außenlagen 4, 5 von der Umgebung U abgeschottet. Ein um die mittlere Lage 3 außen umlaufender Rand 7 weist eine Randbeschichtung 8 bzw. Randversiegelung auf. Diese Randbeschichtung 8 oder Randversiegelung kann durch ein Verfahren, beispielsweise thermisches Spritzen aufgebracht sein. Es kann jedoch auch mindestens eine Außenlage 4, 5 um den Rand 7 umgelegt werden. Somit ist sichergestellt, dass auch der die mittlere Lage 3 umlaufende Rand 7 von der Umgebung U abgeschottet ist. Das Kraftfahrzeugbauteil 1 weist in der schematischen Darstellung von Figur 1 eine homogene Gesamtdicke GD auf. Die Gesamtdicke GD setzt sich zusammen aus der Dicke D4 einer Außenlage 4, addiert mit der Dicke D3 der mittleren Lage 3 sowie der Dicke D5 der zweiten Außenlage 5.

Figur 2 zeigt eine modifizierte Ausgestaltungsvariante, wobei eine auf die Bildebene bezogen untere Außenlage 5 als äußere Außenlage ausgebildet ist. Die auf die Bildebene bezogen obere Außenlage 4 ist als innere Außenlage ausgebildet. Die äußere Außenlage 5 ist in Einbauzustand zu einer Fahrbahnoberfläche 9 hin orientiert angeordnet. Ein auf die äußere Außenlage 5 auftreffender Stein 10, beispielsweise durch Steinschlag hervorgerufen, sollte aufgrund der größeren Dicke D5 der äußeren Außenlage 5 diese gerade nicht durchschlagen. Die darunter befindliche Oberfläche 6 der mittleren Lage 3 ist somit auch nach jahre, oder jahrzehnte langer Nutzung eines Kraftfahrzeuges von der Umgebung U abgeschottet und somit vor Korrosion geschützt. Bevorzugt ist die äußere Außenlage 5 dazu mindestens mehr als 1,3-mal, bevorzugt mehr als 1,5-mal, ganz besonders mehr als 2-mal und insbesondere mehr als 2,5-mal so dick wie die innere Außenlage 4.

Figur 3 zeigt ein erfindungsgemäßes Kraftfahrzeugbauteil als Stoßfängerträger bzw. Querträger 11 ausgebildet in verschiedenen Ansichten. Figur 3a, b und e zeigen drei verschiedene Ansichten des Querträgers 11, der als erfindungsgemäßes Kraftfahrzeugbauteil ausgebildet ist. Der Querträger 11 wird mittels Crashboxen 12 an einer nicht näher dargestellten Kraftfahrzeugkarosserie gekoppelt. Beispielsweise am Ende eines jeweiligen Längsträgers. Der Querträger 11 weist, dargestellt in den Figuren 3a sowie den Schnittansichten Figur 3c und Figur 3d gemäß Schnittlinie C-C und D-D im Querschnitt ein hutförmiges Profil auf. Das Profil ist entgegen der Kraftfahrzeuglängsrichtung X geöffnet ausgebildet. Es ist aber auch möglich, dass das hutförmige Profil in Kraftfahrzeuglängsrichtung X geöffnet ausgebildet ist.

Ein Anbindungsbereich 13 der Crashbox 12 ist dabei bevorzugt mit einem weicheren Werkstoffgefüge und/oder einer dünneren Wandstärke ausgebildet, gegenüber dem restlichen Verlauf des Querträgers 11. Im Falle eines Fahrzeugcrashes kann somit ein Abreißen von den Crashboxen 12 vermieden werden.

Dadurch, dass der restliche in Längsrichtung 14 verlaufende Teil des Querträgers 11 im Querschnitt eine gleiche Wandstärke und/oder eine gleiche Festigkeit aufweist, ist eine hinreichende Steifigkeit gegen Verformung oder Durchbiegung im Falle eines Aufpralls gegeben.

Alternativ ist ein in Längsrichtung 14 von den Anbindungsbereichen 13 jeweils nach innen verlagerter Bereich als Deformationsbereich 15 ausgebildet, insbesondere als Solldeformationsbereich. Dieser Deformationsbereich 15 dient im Falle einer außermittigen Lasteinleitung einer gezielten Deformation derart, dass der Querträger in ungefährdeten Abschnitten verformt wird bzw. die Deformation in ungefährdete Abschnitte verlagert wird. Die Deformationsbereiche 15 sind bevorzugt von einem Mittelpunkt M beabstandet, insbesondere symmetrisch beabstandet. Der Abstand A beträgt bevorzugt 20% bis 40% der Länge L des Querträgers 11. Auch können die Anbindungsbereiche 13 mit den Deformationsbereichen 15 kombiniert werden, so dass diese unmittelbar nebeneinander liegen bzw. teilweise ineinander liegen.

Bevorzugt weist der Querträger 11 eine Wandstärke von 1 mm bis 4 mm, insbesondere von 1,5 mm bis 3,5 mm, besonders bevorzugt von 1,8 mm bis 2,5 mm auf. Der Querträger wird mittels Warmumformen und Presshärten hergestellt, aus einem dreilagigen Schichtverbundstahl 2. Es kann jedoch auch eine Platine verwendet werden, die als Tailor Welded Blank oder Tailor Rolled Blank bereitgestellt ist und nur abschnittsweise als Schichtverbundstahl ausgebildet ist. Die gehärteten Bereiche weisen bevorzugt eine Zugfestigkeit Rm größer gleich 1300 MPa auf, die weichen Bereiche (13, 15) eine Zugfestigkeit Rm von 500 bis 900 MPa.

Figur 4 zeigt ebenfalls einen erfindungsgemäß hergestellten Querträger 11 in Perspektivansicht sowie verschiedenen Schnittansichten. Der Querträger 11 ist gekoppelt an Crashboxen 12, welche wiederum mit einer Flanschplatte 16, beispielsweise am Ende von nicht näher dargestellten Längsträgern an einer Kraftfahrzeugkarosserie gekoppelt sind. Der Querträger 11 selbst ist als Hutprofil derart ausgebildet, dass eine Öffnung 17 auf die Kraftfahrzeuglängsrichtung X bezogen nach vorne gerichtet ist. Der Querträger 11 selbst ist aus dem dreilagigen Schichtverbundstahl mittels Umformen hergestellt. Vor dem Querträger 11 ist nochmals ein Schließblech 18 gekoppelt, dargestellt, insbesondere in den Schnittdarstellungen gemäß Figur 4b, 4c und 4d. Das Schließblech 18 selbst ist im Querschnitt ebenfalls hutförmig konfiguriert. Über einen Großteil der Breite 19 des Querträgers 11 insbesondere über mehr als 60%, bevorzugt mehr als 70%, ganz besonders bevorzugt mehr als 80% der Breite 19 liegen Schließblech 18 und Querträger 11 selbst bevorzugt aneinander an. Insbesondere im mittleren Bereich zwischen den Crashboxen 12 liegen dazu mehr als 70%, bevorzugt mehr als 80%, ganz besonders bevorzugt mehr als 90% der Flächen von Querträger 11 und Schließblech 18 im Querschnitt aneinander an. Gut ersichtlich ist dies in Figur 4b.

In einem Koppelungsbereich 20 sind dann Schließblech 18 und Querträger 11 bevorzugt miteinander durch Fügen gekoppelt. Besonders bevorzugt findet hier ein Verschweißen statt. Querträger und Schließblech können aus dem gleichen Werkstoff ausgebildet sein. Insbesondere optional ist auch das Schließblech 18 aus dem dreilagigen Schichtverbundstahl hergestellt. Auch die Crashbox 12 ist bevorzugt aus dem einen Schichtverbundstahl mit einer ferritisch nichtrostenden Außenlage ausgebildet.

Ferner sind an dem Querträger 11 Anbindungsbereiche 13 ausgebildet, in denen der Querträger 11 sowie auch das Schließblech 18 über einen Teil der Breite 19 des Querträgers 11 optional weicher ausgebildet ist. Dies kann beispielsweise durch eine partielle Wärmenachbehandlung des zunächst durch Warmumformung und Presshärten hergestellten Querträgers 11 erfolgen. Auch können dünnere Wandstärken eingesetzt werden. Als Ausgangsmaterial dient dann ein Tailored Rolled Blank. Möglich ist auch eine partiell unterschiedliche Warmumformung und/oder Presshärtung, so dass weichere Anbindungsbereiche 13 während des Umformens und/oder Presshärtens entstehen. Auch ist es möglich eine Ausgangsplatine mit voneinander verschiedenen Wandstärken zu verwenden. Hierzu wird bevorzugt ein Tailored Welded Blank oder ein Tailored Formed Blank verwendet.

Alternativ ist es weiterhin möglich, dass gezielte Deformationsbereiche 15 in dem Querträger 11 ausgebildet werden. Die Deformationsbereiche 15 sind auf die Breite 19 des Querträgers 11 bezogen gegenüber den Crashboxen 12 nach innen versetzt. Die Breite 19 des Querträgers 11 ist maßgeblich in Kraftfahrzeugquerrichtung Y orientiert ausgebildet. Die Deformationsbereiche 15 werden insbesondere weicher ausgebildet. Dies kann bevorzugt wiederum durch eine partielle Wärmenachbehandlung erfolgen. Auch kann während des Warmumformens und/oder Presshärtens eine partiell unterschiedliche Wärmebehandlung erfolgen, so dass die Deformationsbereiche 15 gezielt weicher ausgebildet sind.

Ferner dargestellt ist eine optionale Hülse 21 sowie eine Durchgangsöffnung 22 zum Koppeln mit einer nicht näher dargestellten Abschleppöse.

Bei der Ausgestaltungsvariante gemäß Figur 3 und 4 haben bevorzugt die Deformationsbereiche 15 eine Breite B15 in Kraftfahrzeugquerrichtung Y von 30 mm bis 100 mm. Die Anbindungsbereiche haben eine Breite B13 von 100 mm bis 250 mm. Beide Bereiche 13 und 15 haben eine Breite zusammen kleiner gleich 300 mm.

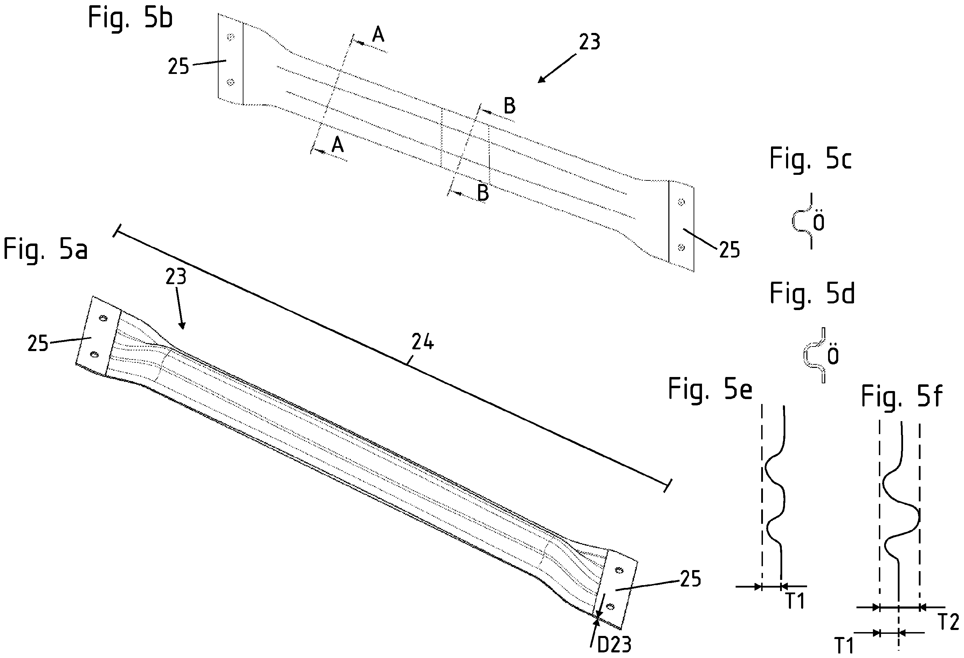

Figur 5a bis d zeigen einen Türaufprallträger 23, hergestellt aus einem erfindungsgemäß dreilagigen Schichtverbundstahl. Der Türaufprallträger 23 gemäß Figur 5a ist einstückig und werkstoffeinheitlich hergestellt aus dem erfindungsgemäß beschriebenen dreilagigen Schichtverbundstahl. Der Türaufprallträger 23 weist über einen Großteil seiner Länge 24 im Querschnitt ein hutförmiges Profil auf, dargestellt in den Querschnittsansichten gemäß Figur 5c und 5d. Die jeweiligen Enden 25 sind flach ausgebildet. Hier kann der Türaufprallträger 23 in ein nicht näher dargestelltes Türgestell einer Kraftfahrzeugtür montiert bzw. gekoppelt werden. Gemäß Figur 5a kann der Türaufprallträger 23 über seine gesamte Länge 24 die gleiche Dicke D23 aufweisen. Eine Öffnung Ö des hutförmigen Querschnitts ist in Richtung zu einem Fahrgastinnenraum gerichtet. Der Türaufprallträger kann jedoch auch weichere oder dünnere Bereiche aufweisen. Insbesondere sind die Enden 25 weich ausgebildet. Dies kann durch partielle Wärmenachbehandlung erfolgen. Auch kann jedoch durch partielles Warmumformen und/oder partielles Presshärten entsprechendes weicheres Gefüge insbesondere der mittleren Lage des Schichtverbundstahls im Bereich der Enden eingestellt werden.

Figur 5e und f zeigen ein jeweils doppelhutförmiges Profil als Querschnitt durch einen Türaufprallträger 23 gemäß Figur 5a. Bei Figur 5e ist eine Tiefe T1 ausgebildet. Hier ist ein doppelhutfömiges Profil ausgebildet, gemäß Figur 5e mit gleicher Tiefer beider Wellen der doppelten Hutform. Die Ausgestaltungsvariante gemäß Figur 5f weist in einer mittleren Welle eine größere Tiefe T2 auf im Vergleich zur Tiefe T1.

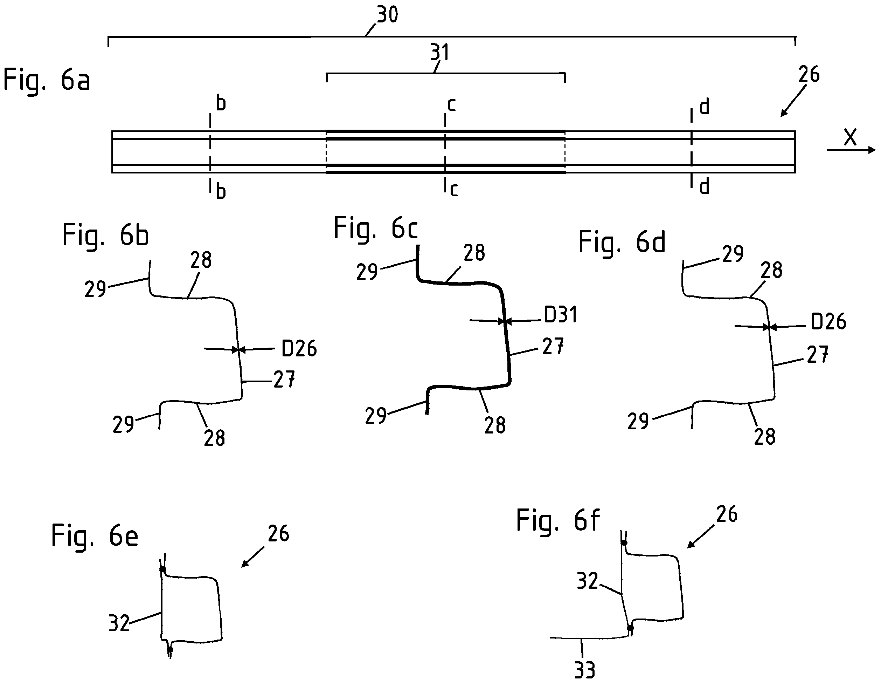

Figur 6a bis d zeigen einen erfindungsgemäß hergestellten Schweller 26. Der Schweller 26 erstreckt sich in Einbaulage von einer A-Säule und einem vorderen Radkasten des Kraftfahrzeugs bis zu einem hinteren Radkasten des Kraftfahrzeugs. Der Schweller ist als Umformbauteil ausgebildet. Er weist gemäß der Querschnittsansichten von Figur 6b bis 6d im Querschnitt ein hutförmiges Profil auf. Das Profil zeichnet sich durch einen mittleren Steg 27 mit seitlich von dem Steg 27 abstehenden Schenkeln 28 aus. Von den Schenkeln 28 stehen wiederum Flansche 29 ab. Auch der Schweller 26 ist aus dem dreilagigen Schichtverbundstahl ausgebildet. Der Schweller 26 weist eine Länge 30 auf. Er ist mit seiner Längsrichtung in Einbaulage in Kraftfahrzeuglängsrichtung X orientiert. Ein mittlerer Abschnitt 31, beispielsweise im Bereich der Anbindung einer B-Säule, weist bevorzugt eine größere Dicke D31 auf, gegenüber der Dicke D26 restlichen Abschnitten des Schwellers. Der mittlere Abschnitt 31 erstreckt sich insbesondere über 10% bis 40%, bevorzugt über 20% bis 30% der Länge 30 des Schwellers 26. Die Dicke D31 ist bevorzugt mehr als 1,2-mal, bevorzugt mehr als 1,5-mal größer gegenüber der Dicke D26 der restlichen Abschnitte des Schwellers. Die unterschiedliche Dicke wird bevorzugt hergestellt durch ein Tailored Rolled Blank, Tailored Formed Blank oder ein Tailored Welded Blank.

Gemäß der Darstellung von Figur 6e und 6f kann der Schweller 26 auch im Querschnitt als geschlossenes Hohlprofil ausgebildet sein. Hierzu ist ein Schließblech 32 vorgesehen. Das Schließblech 32 selbst kann auch aus einem dreilagigen Schichtverbundstahl ausgebildet sein. Das Schließblech 32 kann jedoch auch aus einem handelsüblichen nicht vergütbaren Stahl hergestellt sein. Auch kann das Schließblech 32 aus einem einlagigen vergütbaren Stahl ausgebildet sein. Gemäß Figur 6f kann ferner ein Schließblech 32 mit Randumstellung 33 vorgesehen sein, so dass das Schließblech 32 selbst im Querschnitt L-förmig konfiguriert ist. Damit ist es möglich, dass das Schließblech 32 zusätzlich als Bodenblech oder Bodenblechaufnahme dient.

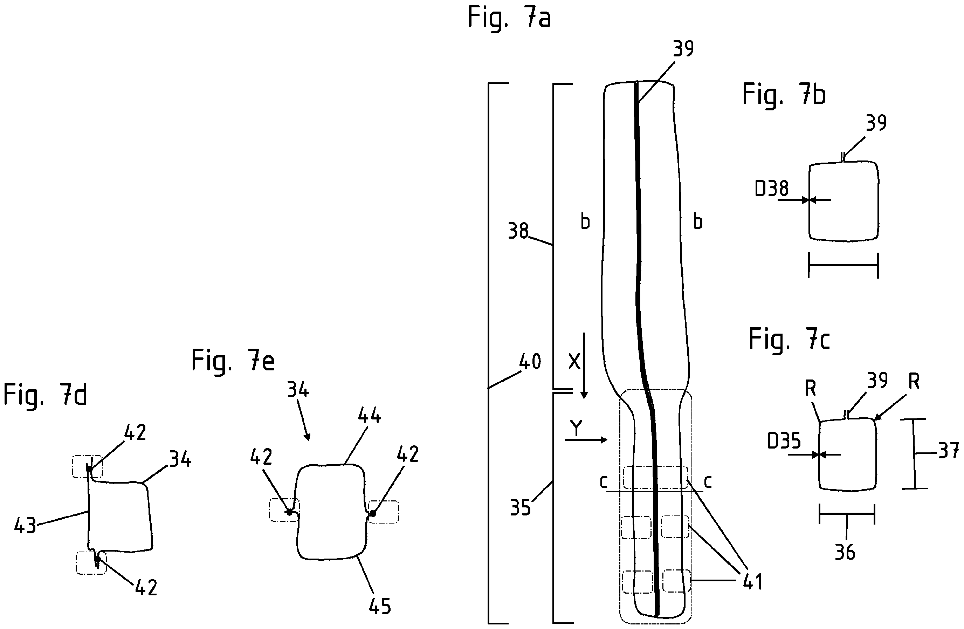

Figur 7a bis c zeigen einen Längsträger 34 in Draufsicht sowie verschiedenen Querschnittsansichten. Der Längsträger 34 ist in Einbaulage in Kraftfahrzeuglängsrichtung X orientiert. Der Längsträger 34 ist insbesondere einstückig und werkstoffeinheitlich bevorzugt einschalig aus dem Schichtverbundstahl ausgebildet. Die Herstellung erfolgt mittels UO-Formen. Die voneinander verschiedenen Querschnitte gemäß Figur 7b und c durch Bereitstellung speziell zugeschnittenen Ausgangsplatine und Pressumformen hergestellt. Nach dem Pressformen zum hohlen Querschnitt erfolgt die Härtung. Somit kann der Längsträger 34 in einem vorderen Abschnitt 35 eine kleinere Breite 36 und/oder kleinere Höhe 37 aufweisen, gegenüber einer Breite 38 und/oder Höhe 37 im hinteren Abschnitt 38. Der Längsträger 34 weist bevorzugt einen abstehenden Flansch 39 auf. Dieser kann entweder dicht geschweißt sein oder auch nur fluiddicht während des Innenhochdruckumformens zusammengedrückt gehalten sein. Bevorzugt sind zumindest Punktverschweißungen vorgesehen.

Der Längsträger 34 weist insbesondere eine Dicke auf, größer 2 mm. Bevorzugt beträgt die Dicke zwischen 2 mm und 6 mm. In einem vorderen Abschnitt kann die Dicke D35 gleich ausgebildet sein in Relation zu der Dicke D38 des hinteren Abschnitts 38. Im vorderen Abschnitt 35 kann die Dicke D35 jedoch auch kleiner ausgebildet sein als die Dicke D38 im hinteren Abschnitt 38. Optional oder ergänzend kann der Werkstoff, insbesondere die mittlere Lage des dreilagigen Schichtverbundstahls im vorderen Bereich 35 weicher ausgebildet sein als im hinteren Abschnitt 38. Der vordere Abschnitt 35 erstreckt sich insbesondere über 10% bis 50%, bevorzugt 20% bis 40% der Länge 40 des Längsträgers 34. Optional ergänzend oder alternativ können im vorderen Abschnitt 35 einzelne Triggerabschnitte 41 vorgesehen sein, die sich beispielsweise über die gesamte Breite 36 oder auch nur teilweise über einen Teil der Breite 36 und/oder der Höhe 37 erstrecken. Die Triggerabschnitte 42 erstrecken sich auch um die Radienbereiche R. Diese Triggerabschnitte 41 sind insbesondere in der mittleren Lage mit einem weicheren Werkstoffgefüge ausgebildet.

Figur 7d und e zeigen alternative Ausgestaltungsvarianten im Querschnitt. Demnach ist der Längsträger 34 zweischalig ausgebildet. Gemäß Figur 7d weist der Längsträger 34 ein Schließblech 43 auf, welches in Koppelabschnitten 42 mit dem Längsträger 34 gekoppelt ist. Insbesondere sind die Koppelabschnitte 42 weicher ausgebildet. Ein Auf- oder Abreißen, insbesondere eine Rissbildung im Falle eines Fahrzeugcrashes wird hierdurch vermieden. In den Ausgestaltungsvarianten gemäß Figur 7d und 7e ist der Längsträger 34 bzw. sind die Ober- und Unterschale 44, 45 warm umgeformt und pressgehärtet. Weiche Bereiche können beispielsweise durch eine partielle Wärmenachbehandlung hergestellt sein. Alternativ oder ergänzend kann auch eine partielle Temperierung während des Warmumformens und/oder eine partielle Presshärtung während des Presshärtens hergestellt sein, so dass das Werkstoffgefüge in diesen Triggerabschnitten 41 entsprechend weicher ausgebildet ist, gegenüber dem Werkstoffgefüge des restlichen Längsträgers 34. Es ist auch möglich, dass nur der Längsträger 34 bzw. die Unterschale 45 warmgeformt und pressgehärtet ausgebildet sind.

Figur 7e zeigt eine weitere Ausgestaltungsvariante des Längsträgers 34 im Querschnitt. Hierbei ist der Längsträger 34 zweischalig ausgebildet, aufweisend eine Oberschale 44 sowie eine Unterschale 45. Auch hier ist in Koppelabschnitten 42 ein entsprechend weicheres Werkstoffgefüge ausgebildet. So dass eine Koppelung, beispielsweise durch Verschweißen, im Falle eines Fahrzeugcrashes nicht zu einer Rissbildung führt. Die Ausführungsvarianten gemäß Figur 7d und e können ebenfalls einen vorderen Abschnitt und einen hinteren Abschnitt aufweisen sowie die Triggerabschnitte 41.

Insbesondere verlaufen die Trägerabschnitte 41 in ihrer Orientierung in Kraftfahrzeugquerrichtung Y. Bei einem Frontalcrash wird somit ein ziehharmonikaartiges Faltverhalten bzw. Stauchverhalten des Längsträgers initiiert und begünstigt.

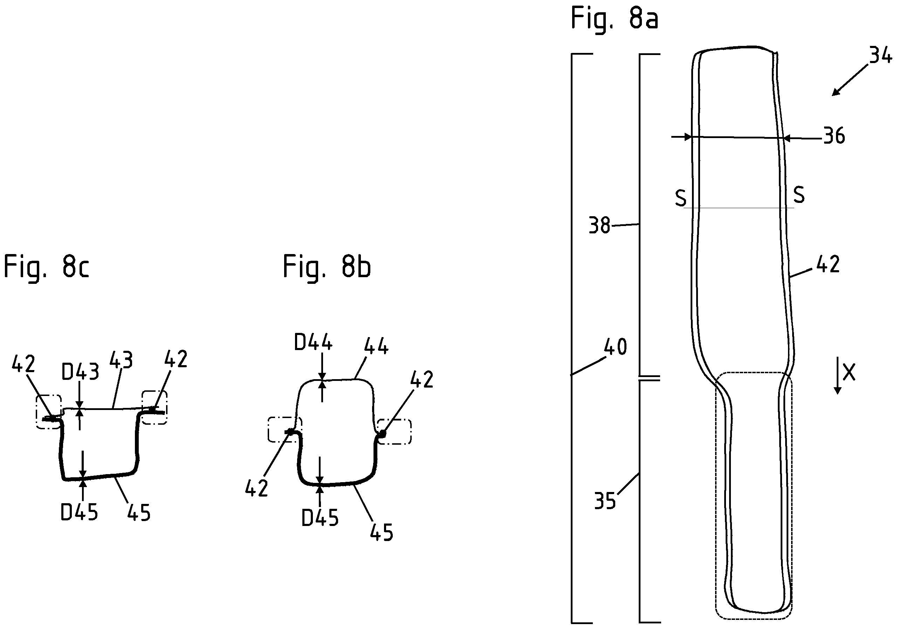

Figur 8a bis c zeigen verschiedene Ausgestaltungsvarianten eines alternativen Längsträgers 34. Figur 8a zeigt eine Draufsicht auf den Längsträger 34. Dieser weist ebenfalls eine Länge 40 auf sowie einen vorderen Abschnitt 35 und einen hinteren Abschnitt 38. Der hintere Abschnitt 38 hat eine größere Breite, gegenüber dem vorderen Abschnitt 35. Bevorzugt ist wiederum im vorderen Abschnitt eine geringere Festigkeit ausgebildet. Dies kann durch ein weicheres Werkstoffgefüge und/oder eine geringere Wandstärke bzw. Dicke ausgebildet sein. Insbesondere ist in diesem Fall der gesamte vordere Abschnitt 35 weicher ausgebildet in Relation zu dem hinteren Abschnitt 38.

Gemäß der Querschnittsansichten S-S ist auch hier der Längsträger 34 insbesondere im Querschnitt als geschlossenes Hohlprofil ausgebildet. In Figur 8b als Zweischalenbauteil, aufweisend eine Oberschale 44 und eine Unterschale 45. Im Koppelabschnitt 42 wiederum ein weicheres Werkstoffgefüge aufweisend, sind diese verbunden, beispielsweise über Punktschweißungen. Die Dicke D45 der Unterschale 45 ist größer ausgebildet als die Dicke D44 der Oberschale 44. Bevorzugt weist die Oberschale 44 eine Dicke D44 kleiner gleich 1,5 mm, insbesondere 0,8 mm bis 1,0 mm auf. Die Dicke der Unterschale 45 ist entsprechend größer, bevorzugt 1,0 mm bis 1,5 mm.

Bevorzugt ist die Dicke der Unterschale 45 mehr als 1,2, insbesondere mehr als 1,5-mal größer als die Dicke der Oberschale 44. Der gesamte Längsträger 34, mithin Oberschale 44 und Unterschale 45 ist bevorzugt aus entsprechendem dreilagigen Schichtverbundwerkstahl ausgebildet.

Die Ausgestaltungsvariante gemäß Figur 8c zeigt eine Querschnittsansicht gemäß der Schnittlinie S-S aus Figur 8a. Hier ist der Längsträger 4 ausschließlich aus einer Unterschale 45 ausgebildet. Dieser ist mit einem Schließblech 43 gekoppelt. In den Koppelabschnitten 42 ist auch hier ein weicheres Werkstoffgefüge ausgebildet. Beispielsweise sind Punktschweißungen vorgesehen. In einem Crashfall kommt es nicht zu einem Reißen oder Abreißen zwischen Unterschale 45 und Schließblech 43. Die Dicke D45 der Unterschale 45 ist in Relation zu der Dicke D43 des Schließbleches 43 größer ausgebildet.

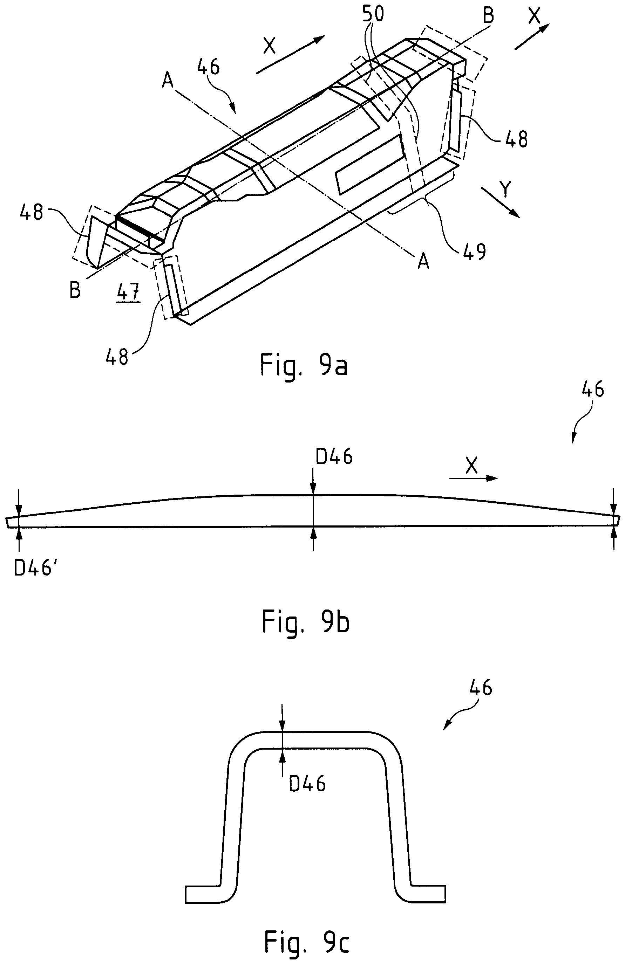

Figur 9a bis c zeigen einen erfindungsgemäß hergestellten Tunnel 46. Der Tunnel 46 ist als Getriebetunnel ausgebildet. Figur 9b zeigt eine Längsschnittansicht gemäß der Schnittlinie B-B und Figur 9c zeigt eine Querschnittansicht gemäß der Schnittlinie A-A des Tunnels 46. Der Tunnel 46 weist bevorzugt voneinander verschiedene Dicken D46, D46' auf. Die Dicke D46 ist dabei in einem auf die Kraftfahrzeuglängsrichtung X bezogen mittleren Abschnitt ausgebildet und erstreckt sich homogen über den Querschnitt. Zu den Enden 47 des Tunnels 46 hin nimmt die Dicke D46 zur Dicke D46' ab. Diese erstreckt sich bevorzugt wiederum homogen über den dortigen Querschnitt. Am vorderen Ende 47 und hinteren Ende 47 sind Flansche 48 angeordnet, beispielsweise am vorderen Ende 47 zur Koppelung mit einer nicht näher dargestellten Spritzwand oder Feuerschutzwand. Die Flansche 48 sind bevorzugt mit einer geringeren Dicke und/oder einem weicheren Werkstoffgefüge ausgebildet. Im Falle eines Fahrzeugcrashes kommt es somit an den Flanschen 48 nicht zu einem Abreißen oder einer Rissbildung. Weiterhin ist in einem vorderen Längenabschnitt 49 des Tunnels vorgesehen, dass in Kraftfahrzeugquerrichtung Y, mithin quer zur Kraftfahrzeuglängsrichtung X Deformationsstreifen 50 ausgebildet sind. Die Deformationsstreifen 50 sind bevorzugt durch partielle Wärmenachbehandlung, partielles Warmumformen, partielles Presshärten und/oder eine geringere Dicke ausgebildet und stellen eine Alternative zu einer reduzierten Dicke D46 vor dem Ende 47 dar. Auch hier kann die Blechplatine zur Herstellung des als Tunnels 46 Tailored Rolled Blank, als Tailored Formed Blank oder Tailored Welded Blank ausgebildet sein.

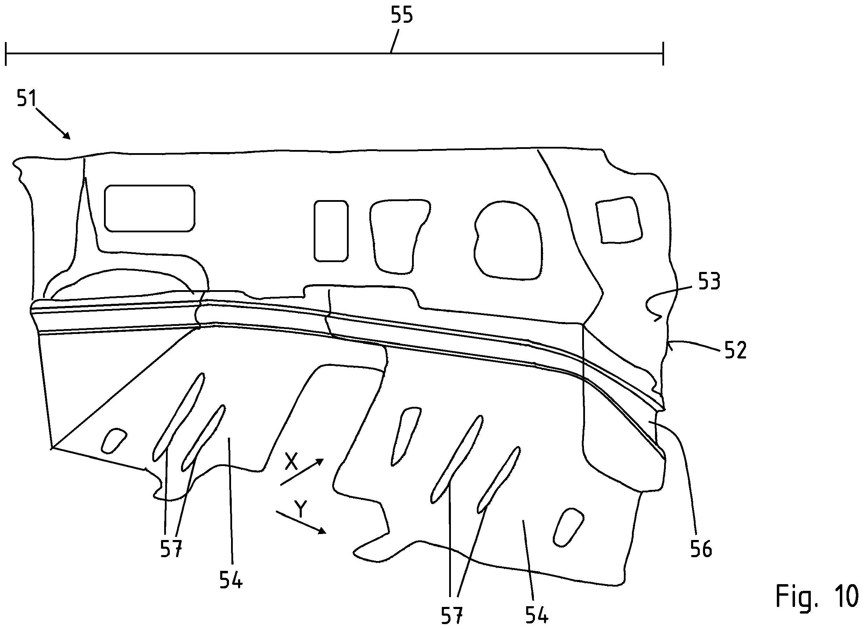

Figur 10 zeigt eine Stirnwand 51 einer Kraftfahrzeugkarosserie. Die Stirnwand kann auch als Feuerwand bezeichnet werden. Eine nach außen gerichtete Außenseite 52 zeigt in Richtung zum nicht näher dargestellten Motorraum. Eine nach innen gerichtete Innenseite 53 zeigt zu einem nicht näher dargestellten Fahrgastraum. Die Stirnwand 51 ist bevorzugt einstückig und werkstoffeinheitlich aus dem dreilagigen Schichtverbundstahl ausgebildet. Die Außenlage des Schichtverbundstahls, welche zur Außenseite 52 orientiert liegt, weist weiterhin bevorzugt eine größere Dicke auf, in Relation zu der inneren Außenlage. Somit ist ein verbesserter Steinschlagschutz gegeben.

Es ist jedoch auch vorstellbar, dass die Stirnwand 51 aus mehreren Einzelblechen hergestellt ist, als Tailored Welded Blank ausgebildet ist oder auch als Baugruppe, so dass zunächst mehrere Einzelbleche hergestellt werden, die dann miteinander gekoppelt werden, zu der Stirnwand 51. Insbesondere im unteren Bereich angeordnete Fußbleche 54 sind mittels Warmumformen und Presshärten hergestellt. Bevorzugt ist die gesamte Stirnwand 51 und/oder alle Bauteile die zur Herstellung einer Stirnwand 51 benötigt werden, entsprechend durch Warmumformen und Presshärten hergestellt. Zumindest die Fußbleche 54 sind jedoch aus dem dreilagigen Schichtverbundstahl ausgebildet. Über die gesamte Breite 55 der Stirnwand 51 verlaufend ist eine Quersicke 56 ausgebildet. Diese Quersicke 56 verbessert die Steifigkeit im Falle eines Seitenaufpralles. Optional dient die Quersicke 56 zur Aufnahme eines zusätzlichen Querträgers. In den Fußblechen 54 sind Längssicken 57 eingearbeitet. Diese Längssicken 57 verbessern die Widerstandsfähigkeit im Falle eines Crashes und/oder gegen Durchbiegung. Insbesondere der gegen Eindringen wirkende Widerstand und die Gesamtsteifigkeit werden durch oben genannte Sicken 56, 57 verbessert. Oberhalb der Quersicke 56 kann die Stirnwand 51 auch aus einem einlagigen Stahlblech ausgebildet sein, da dieser wenig auf Korrosion beansprucht ist. Auch die Quersicke 56 kann optional mit einem Fußblech 54 als Tailored Welded Blanks verbunden sein.

Bevorzugt ist die Stirnwand mit einer Dicke von 0,8 mm bis 2,0 mm ausgebildet.

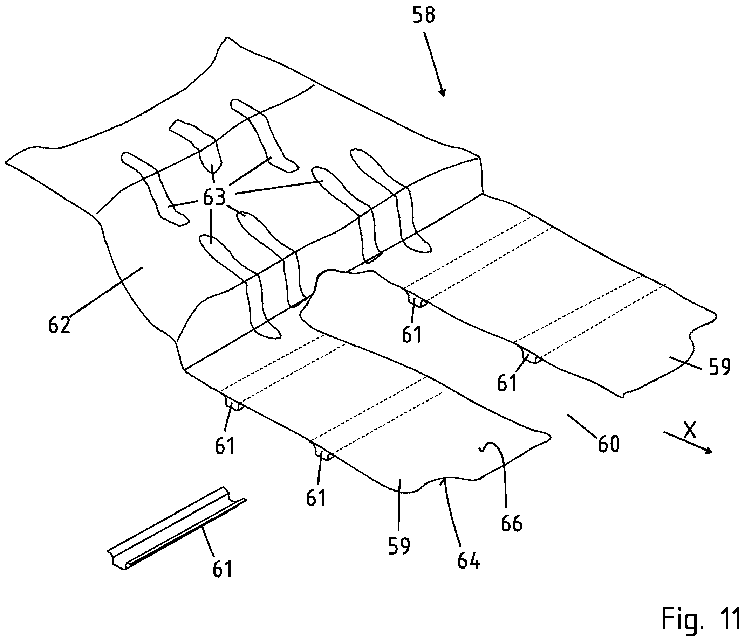

Figur 11 zeigt ein erfindungsgemäßes Bodenblech 58. Das Bodenblech 58 ist ebenfalls aus dreilagigem Schichtverbundstahl hergestellt. Ferner ist das Bodenblech 58 einstückig und werkstoffeinheitlich ausgebildet. Das Bodenblech 58 kann jedoch auch aus Einzelteilen hergestellt sein, die zunächst umgeformt und anschließend miteinander gekoppelt werden. Insbesondere bei einem mehrteiligen Bodenblech 58 sind alle Teile des Bodenbleches 58 durch Warmumformen und Presshärten hergestellt. Das Bodenblech 58 weist zwei vordere Sitzabschnitte 59 auf. Zwischen den Sitzabschnitten ist eine Aussparung 60 ausgebildet, in welcher ein nicht näher dargestellter Getriebetunnel angeordnet wird. Unterhalb der Sitzbleche 59 sind einzelne Querträger 61 angeordnet, die insbesondere die Quersteifigkeit des Fahrgastraumes verbessern, insbesondere bei einem Aufprall als Seitencrash (Poltest). Ferner ist eine höhere Steifigkeit gegen Durchbiegung aufgrund der Querträger 61 gegeben. Bevorzugt sind auch die Querträger 61 aus dem dreilagigen Schichtverbundstahl ausgebildet.

Ein hinterer Heckabschnitt 62 des Bodenbleches 58 ist zur Aufnahme einer Rückbank und/oder als Unterboden eines Kofferraumes vorgesehen. Dieser weist bevorzugt Längssicken 63, welche in Kraftfahrzeuglängsrichtung X orientiert ausgebildet sind auf. Die Längssicken 63 bewirken auch hier eine höhere Steifigkeit gegen Durchbiegung sowie ein besseres Steifigkeitsverhalten gerade bei Heckaufprall. Eine Außenseite 64 ist zu einer Fahrbahnoberfläche 65 hin gerichtet orientiert. An der Außenseite 64 ist bevorzugt eine dickere Außenlage des dreilagigen Schichtverbundstahls ausgebildet, gegenüber der Außenlage an einer Innenseite 66. Somit ist an der Außenseite 64 ein besserer Schutz gegen Steinschlag gegeben. Auch hier können einzelne Bereiche oder Abschnitte durch Verwendung von Tailored Rolled Blanks, Tailored Welded Blanks, insbesondere im Heckabschnitt des Bodenbleches gezielt mit einer geforderten Steifigkeit bzw. verschiedenen Wandstärken bzw. Dicken versehen werden.

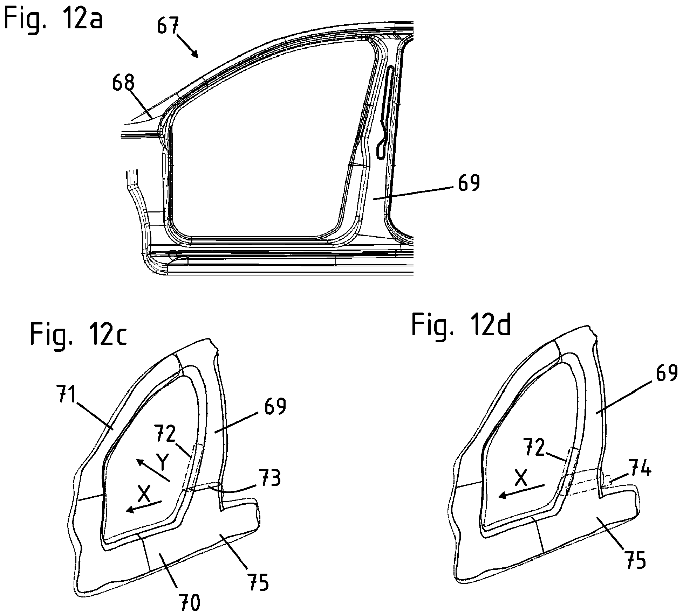

Figur 12a bis d zeigen einen Türrahmen 67, der Teil einer Seitenwand einer Kraftfahrzeugkarosserie ist. Der Türrahmen 67 kann auch als Türring bezeichnet werden. Der Türrahmen 67 weist insbesondere den vorderen Teil einer A-Säule 68, im hinteren Teil eine B-Säule 69 sowie im unteren Teil einen Schweller 70 auf. Der gesamte Türrahmen 67 kann einteilig und werkstoffeinheitlich aus dem dreilagigen Schichtverbundstahl ausgebildet sein. Es können jedoch auch einzelne Blechplatinen miteinander gekoppelt sein und zu dem Türrahmen 67 umgeformt werden, wobei wenigstens bei einer Blechplatine ein dreilagiger Schichtverbundstahl verwendet wird. Der Türrahmen 67 kann insbesondere durch einen direkten Warmumform- und Presshärteprozess hergestellt werden. Der Türrahmen 67 ist bevorzugt als strukturelles Außenhautteil in der Kraftfahrzeugkarosserie eingesetzt. Er ist im Teilsichtbereich angeordnet. Mithin wird er nur durch die geschlossene nicht dargestellte Tür zeitweise verdeckt. Auf ein separates, die gesamte Tür umgebendes Außenhautbauteil kann verzichtet werden.

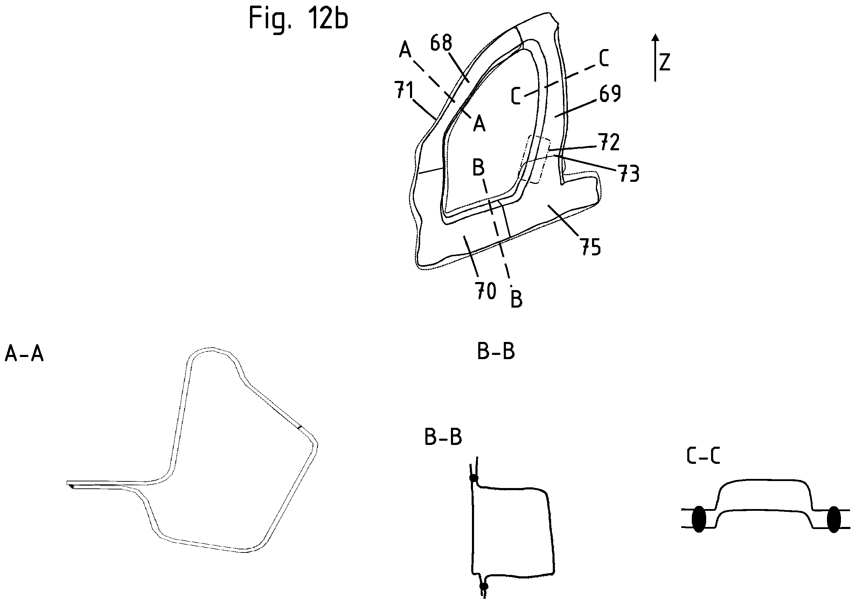

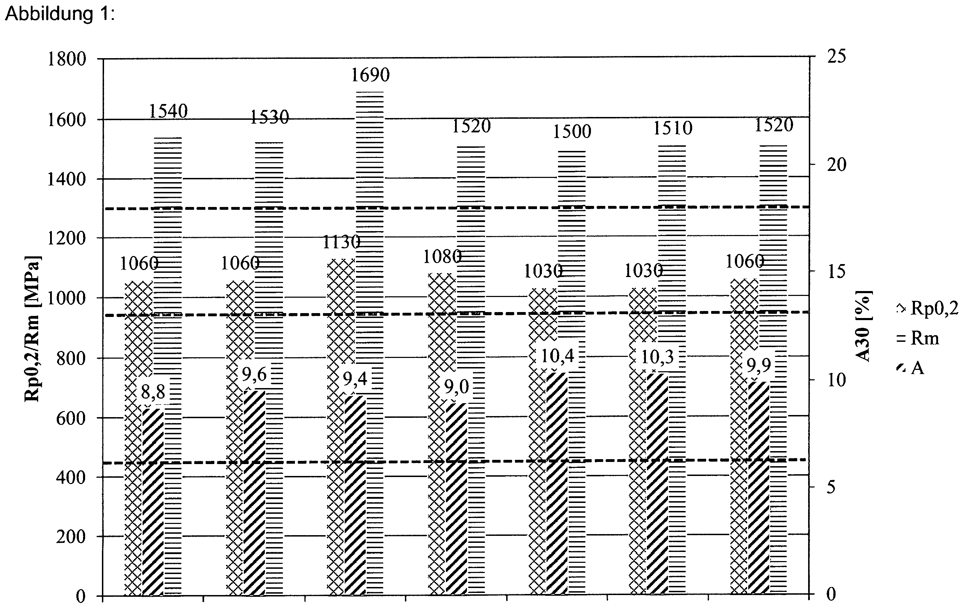

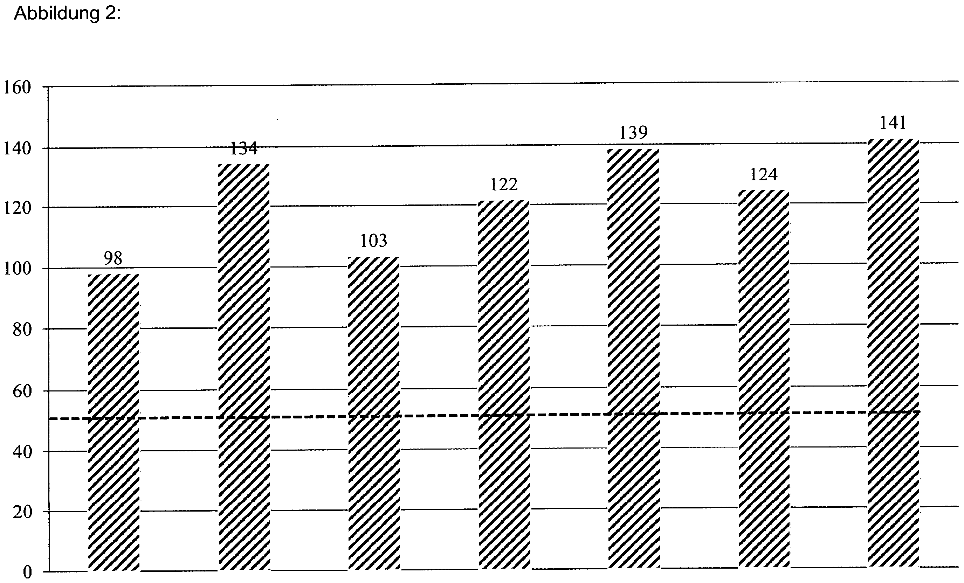

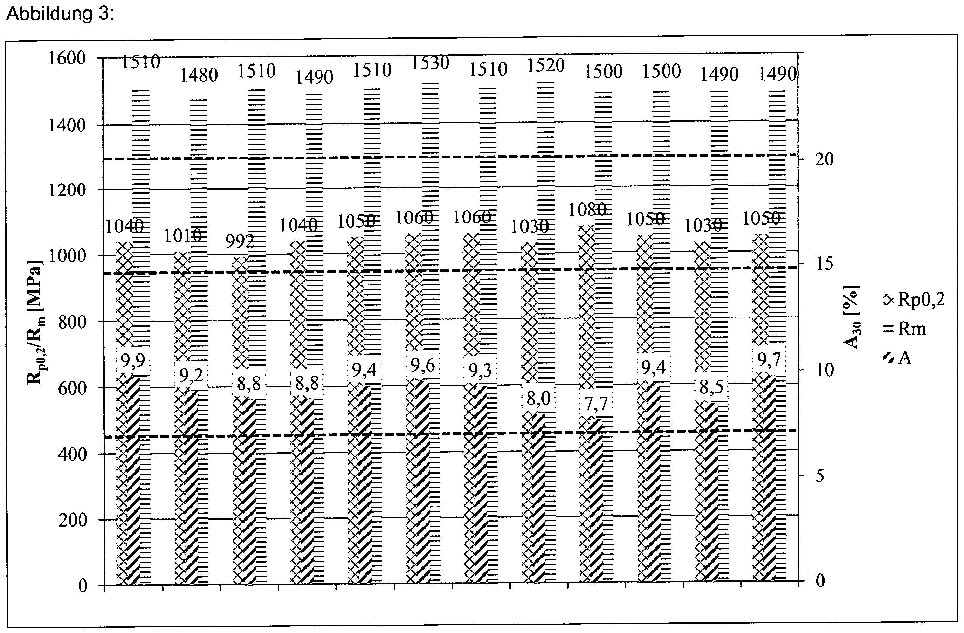

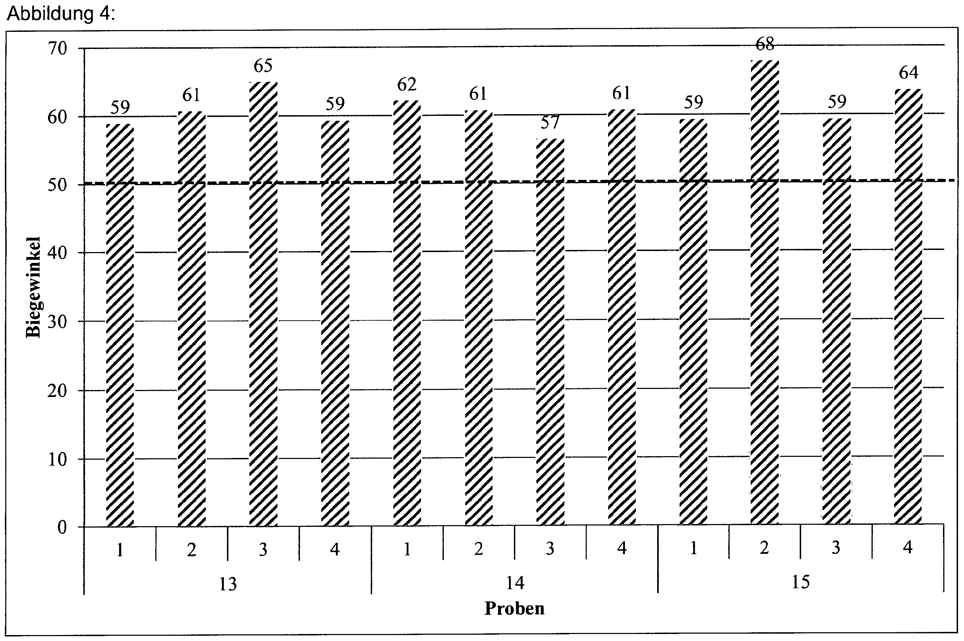

Bevorzugt weist der Türrahmen gemäß der Ausführungsbeispiele in Figur 12b, c und d voneinander verschiedene Festigkeitsbereiche auf. Insbesondere ist ein gestrichelter Bereich der insbesondere die A-Säule 68 sowie den Schweller 70 betrifft als schwächerer und/oder dünnerer Bereich ausgebildet. Der Teil der B-Säule 69 ist hierbei insbesondere in Relation zu dem schwächeren Bereich als dickerer Bereich ausgebildet, so dass eine hinreichende Stabilität im Falle eines Überschlages und/oder Seitencrashes durch die B-Säule 69 realisiert ist. Der weiche Bereich ist durch geringere Dicke und/oder geringere Festigkeitseigenschaften des Werkstoffes ausgebildet. Hierzu ist ein weiterer duktiler Bereich 72 im Bereich der Schlossanbindung einer Tür ausgebildet. Der weitere duktile Bereich 72 ist durch Wärmebehandlung, beispielsweise eine partielle Wärmenachbehandlung entsprechend weicher hergestellt. Durch den geschwächten Bereich ist sichergestellt, dass eine Schlossanbindung im Crashfall nicht abreißt.

Querschnittsansichten zu den Schnittlinien A-A, B-B und C-C sind in Figur 12b entsprechend mit dargestellt. Der Türrahmen ist insgesamt hohl ausgebildet. Hierbei sind ein außenliegender Abschnitt sowie ein innenliegender Abschnitt dargestellt mit darin befindlichem Hohlraum.

Figur 12c zeigt eine dazu alternative Ausgestaltungsvariante. Hier ist im Bereich von Bezugszeichen 73 eine Schweißnaht ausgebildet bzw. ein Übergang von weichem zu hartem Bereich. Im Bereich des Fußbereiches 75 ist ein weicheres Werkstoffgefüge bzw. dünneres Ausgangsmaterial ausgebildet. Es kann hier durch partielles Warmformen, partielles Presshärten oder auch eine partielle Wärmenachbehandlung ein entsprechend weicheres Werkstoffgefüge eingestellt werden. Die B-Säule im Bereich von Bezugszeichen 69 selbst, also oberhalb der Schweißnaht 75 bzw. oberhalb des Übergangs, ist dann wiederum härter ausgebildet. Der restliche obere Bereich der B-Säule 69 ist in Relation zu dem übrigen Werkstoffgefüge mit höherer Festigkeit und/oder größerer Dicke ausgebildet, so dass auch hier ein hinreichender Schutzumfang im Falle eines Überschlages oder Seitencrashes erfolgt. Der Bereich des Schwellers 70 sowie der A-Säule 71 sind bevorzugt mit weicherem Werkstoffgefüge oder geringerer Dicke ausgebildet.

Figur 12d zeigt eine weitere Ausgestaltungsvariante des erfindungsgemäß hergestellten Türrahmens 67. Hier ist ein in Kraftfahrzeuglängsrichtung X verlaufender Längsstreifen 74 im unteren Bereich der B-Säule 69 mit einem weicheren Werkstoffgefüge ausgebildet. Ebenfalls ist bei allen Ausgestaltungsvarianten der weitere duktile Bereich 72 im Bereich zur Aufnahme eines Türschlosses ausgebildet. Bei allen Ausgestaltungsvarianten kann weiterhin der Fußbereich der B-Säule besonders duktil und/oder ungehärtet sein. Hier kann auch ein nicht vergütbarer Werkstoff zum Einsatz kommen.

### Bezugszeichen:

- 1 -: Kraftfahrzeugbauteil
- 2 -: Schichtverbundstahl
- 3 -: mittlere Lage
- 4 -: Außenlage
- 5 -: Außenlage
- 6 -: Oberfläche zu 3
- 7 -: Rand zu 3
- 8 -: Randbeschichtung
- 9 -: Fahrbahnoberfläche
- 10 -: Stein
- 11 -: Querträger
- 12 -: Crashbox
- 13 -: Anbindungsbereich zu 12
- 14 -: Längsrichtung zu 11
- 15 -: Deformationsbereich
- 16 -: Flanschplatte
- 17 -: Öffnung
- 18 -: Schließblech
- 19 -: Breite zu 11
- 20 -: Koppelungsbereich
- 21 -: Hülse
- 22 -: Durchgangsöffnung
- 23 -: Türaufprallträger
- 24 -: Länge
- 25 -: Ende
- 26 -: Schweller
- 27 -: mittlerer Steg
- 28 -: Schenkel
- 29 -: Flansch
- 30 -: Länge
- 31 -: mittlerer Abschnitt
- 32 -: Schließblech
- 33 -: Randumstellung
- 34 -: Längsträger
- 35 -: vorderer Abschnitt zu 34
- 36 -: Breite zu 34
- 37 -: Höhe zu 34
- 38 -: hinterer Abschnitt zu 34
- 39 -: Flansch
- 40 -: Länge zu 34
- 41 -: Trägerabschnitt
- 42 -: Koppelabschnitt
- 43 -: Schließblech zu 34
- 44 -: Oberschale zu 34
- 45 -: Unterschale zu 34
- 46-: Tunnel
- 47 -: Ende zu 46
- 48 -: Flansch
- 49 -: vorderer Längenabschnitt
- 50 -: Deformationsstreifen
- 51 -: Stirnwand
- 52 -: Außenseite zu 51
- 53 -: Innenseite zu 51
- 54 -: Fußblech
- 55 -: Breite zu 51
- 56 -: Quersicke
- 57 -: Längssicke
- 58 -: Bodenblech
- 59 -: Sitzabschnitt
- 60 -: Aussparung
- 61 -: Querträger
- 62 -: Heckabschnitt
- 63 -: Längssicke
- 64 -: Außenseite zu 58
- 65 -: Fahrbahnoberfläche
- 66 -: Innenseite zu 58
- 67 -: Türrahmen
- 68 -: A-Säule zu 67
- 69 -: B-Säule zu 67
- 70 -: Schweller zu 67
- 71 -: weicher Bereich
- 72 -: weiterer duktiler Bereich
- 73 -: Schweißnaht / Übergang
- 74 -: Längsstreifen
- 75 -: Fußbereich zu 69

- A -: Abstand
- B13 -: Breite zu 13
- B15 -: Breite zu 15
- D3 -: Dicke zu 3
- D4 -: Dicke zu 4
- D5 -: Dicke zu 5
- D26 -: Dicke zu 26
- D31 -: Dicke zu 31
- D34 -: Dicke zu 34
- D35 -: Dicke zu 35
- D38 -: Dicke zu 38
- D43 -: Dicke zu 43
- D44 -: Dicke zu 44
- D45 -: Dicke zu 45
- GD -: Gesamtdicke
- L -: Länge zu 11
- M -: Mittelpunkt zu 11
- T1 -: Tiefe
- T2 -: Tiefe
- U -: Umgebung
- X -: Kraftfahrzeuglängsrichtung
- Y -: Kraftfahrzeugquerrichtung

## Patentansprüche

1. Kraftfahrzeugbauteil, hergestellt durch Warmumformen und Presshärten einer metallischen Platine aus einer härtbaren Stahllegierung, wobei das Kraftfahrzeugbauteil aus einem dreilagigen Schichtverbundstahl ausgebildet ist, wobei eine mittlere Lage aus der härtbaren Stahllegierung ausgebildet ist und die Außenlagen aus einer rostfreien Stahllegierung, insbesondere einer rostfreien Edelstahllegierung ausgebildet sind, **dadurch gekennzeichnet, dass** das Kraftfahrzeugbauteil zumindest abschnittsweise im Querschnitt als geschlossenes Hohlprofil mit in Längsrichtung voneinander verschiedenen Querschnitten ausgebildet ist.

2. Kraftfahrzeugbauteil nach Anspruch 1, **dadurch gekennzeichnet, dass** es als Schweller, als Querträger, als Türaufprallträger, als Türrahmen einer Seitenwand, als Tunnel, als Längsträger, als Stirnwand, als Unterboden oder als Kraftfahrzeugsäule ausgebildet ist.

3. Kraftfahrzeugbauteil nach dem vorhergehenden Anspruch, **dadurch gekennzeichnet, dass** das geschlossene Hohlprofil durch U-O Formen ausgebildet ist und/oder dass das Hohlprofil durch Innenhochdruckumformung mit in Längsrichtung voneinander verschiedenen Querschnitten ausgebildet ist.

4. Kraftfahrzeugbauteil nach einem der vorhergehenden Ansprüche, **dadurch gekennzeichnet, dass** das Kraftfahrzeugbauteil ein Schließblech aufweist, wobei das Schließblech aus dem dreilagigen Schichtverbundstahl ausgebildet ist oder aus einem von dem dreilagigen Schichtverbundstahl verschiedenen Werkstoff.

5. Kraftfahrzeugbauteil nach einem der vorhergehenden Ansprüche, **dadurch gekennzeichnet, dass** die Platine als Tailored Rolled Blank, Tailored Formed Blank oder Tailored Welded Blank hergestellt ist, so dass das Kraftfahrzeugbauteil bereichsweise voneinander verschiedene Dicken aufweist.

6. Kraftfahrzeugbauteil nach einem der vorhergehenden Ansprüche, **dadurch gekennzeichnet, dass** die Außenlagen eine in Relation zueinander verschiedene Dicken aufweisen.

7. Kraftfahrzeugbauteil nach einem der vorhergehenden Ansprüche, **dadurch gekennzeichnet, dass** das Kraftfahrzeugbauteil mindestens einen geschwächten Bereich aufweist.

8. Kraftfahrzeugbauteil nach dem vorhergehenden Anspruch, **dadurch gekennzeichnet, dass** der geschwächte Bereich durch geringere Dicke und/oder geringere Festigkeit des Werkstoffgefüges der mittleren Lage ausgebildet ist.

9. Kraftfahrzeugbauteil nach einem der vorhergehenden Ansprüche, **dadurch gekennzeichnet, dass** das Kraftfahrzeugbauteil einer Wärmenachbehandlung unterzogen wurde.

10. Kraftfahrzeugbauteil nach einem der vorhergehenden Ansprüche, **dadurch gekennzeichnet, dass** die mittlere Lage eine Zugfestigkeit Rm größer 1400MPa aufweist, insbesondere größer 1700MPa.

## Claims

1. Motor vehicle component, produced by hot forming and press hardening of a metallic plate made of a hardenable steel alloy, wherein the motor vehicle component is formed from a three-layer laminated composite steel, wherein a middle layer is formed from the hardenable steel alloy, and the outer layers are formed from a stainless steel alloy, in particular a stainless high-grade steel alloy, **characterised in that** the motor vehicle component is formed at least in sections in cross-section as a closed hollow profile with cross-sections which differ from one another in the longitudinal direction.

2. Motor vehicle component according to Claim 1, **characterised in that** it is designed as a sill, as a cross-member, as a door impact beam, as a door frame of a side wall, as a tunnel, as a longitudinal beam, as an end wall, as an underbody or as a motor vehicle column.

3. Motor vehicle component according to the preceding claim, **characterised in that** the closed hollow profile is formed by U-O forming and/or **in that** the hollow profile is formed by internal high-pressure forming with cross-sections which differ from one another in the longitudinal direction.

4. Motor vehicle component according to any one of the preceding claims, **characterised in that** the motor vehicle component has a strike plate, wherein the strike plate is formed from the three-layer composite layer steel or from a material different from the three-layer composite layer steel.

5. Motor vehicle component according to any one of the preceding claims, **characterised in that** the blank is produced as a tailored rolled blank, tailored formed blank or a tailored welded blank, so that the motor vehicle component has thicknesses which differ from one another in regions.

6. Motor vehicle component according to any one of the preceding claims, **characterised in that** the outer layers have different thicknesses in relation to one another.

7. Motor vehicle component according to any one of the preceding claims, **characterised in that** the motor vehicle component has at least one weakened region.

8. Motor vehicle component according to the preceding claim, **characterised in that** the weakened region is formed by a lower thickness and/or strength of the material structure of the middle layer.

9. Motor vehicle component according to any one of the preceding claims, **characterised in that** the motor vehicle component has been subjected to post-weld heat treatment.

10. Motor vehicle component according to any one of the preceding claims, **characterised in that** the middle layer has a tensile strength Rm greater than 1400MPa, in particular greater than 1700MPa.

## Revendications

1. Composant de véhicule automobile, fabriqué par formage à chaud et trempe sous presse d'une platine métallique en un alliage d'acier durcissable, dans lequel le composant de véhicule automobile est réalisé en un acier composite à trois couches, dans lequel une couche centrale est réalisée en l'alliage d'acier durcissable et les couches extérieures sont réalisées en un alliage d'acier résistant à la rouille, en particulier un alliage d'acier inoxydable résistant à la rouille, **caractérisé en ce que** le composant de véhicule automobile est réalisé au moins par section dans la coupe transversale en tant que profil creux fermé avec des coupes transversales différentes les unes des autres dans la direction longitudinale.

2. Composant de véhicule automobile selon la revendication 1, **caractérisé en ce qu'**il est réalisé en tant que seuil, en tant que traverse, en tant que support de choc de portière, en tant que cadre de portière d'une paroi latérale, en tant que tunnel, en tant que longeron, en tant que paroi avant, en tant que bas de caisse ou en tant que colonne de véhicule automobile.

3. Composant de véhicule automobile selon la revendication précédente, **caractérisé en ce que** le profil creux fermé est réalisé par formage U-O et/ou que le profil creux est réalisé par déformation à haute pression intérieure avec des coupes transversales différentes les unes des autres dans la direction longitudinale.

4. Composant de véhicule automobile selon l'une quelconque des revendications précédentes, **caractérisé en ce que** le composant de véhicule automobile présente une tôle de fermeture, dans lequel la tôle de fermeture est réalisée en un acier composite à trois couches ou en un matériau différent de l'acier composite à trois couches.

5. Composant de véhicule automobile selon l'une quelconque des revendications précédentes, **caractérisé en ce que** la platine est fabriquée en tant que Tailored Rolled Blank, Tailored Formed Blank ou Tailored Welded Blank, de sorte que le composant de véhicule automobile présente des épaisseurs différentes les unes des autres par zone.

6. Composant de véhicule automobile selon l'une quelconque des revendications précédentes, **caractérisé en ce que** les couches extérieures présentent des épaisseurs différentes les unes des autres.

7. Composant de véhicule automobile selon l'une quelconque des revendications précédentes, **caractérisé en ce que** le composant de véhicule automobile présente au moins une zone affaiblie.

8. Composant de véhicule automobile selon la revendication précédente, **caractérisé en ce que** la zone affaiblie est réalisée par une épaisseur plus faible et/ou une rigidité plus faible de la structure du matériau de la couche centrale.

9. Composant de véhicule automobile selon l'une quelconque des revendications précédentes, **caractérisé en ce que** le composant de véhicule automobile a subi un post-traitement thermique.

10. Composant de véhicule automobile selon l'une quelconque des revendications précédentes, **caractérisé en ce que** la couche centrale présente une résistance à la traction Rm supérieure à 1 400 MPa, en particulier supérieure à 1 700 MPa.
